# EUROPEAN PATENT APPLICATION

(11) **EP 4 277 391 A1**
(43) Date of publication of application: **15.11.2023**
(21) Application number: 21917327.5
(22) Date of filing: 29.12.2021
(51) Int. Cl.: H04W 72/04, H04W 52/02

(54) **TIMER MAINTENANCE METHOD FOR DIRECT COMMUNICATION INTERFACE, APPARATUS, AND READABLE STORAGE MEDIUM**

(30) Priority: 05.01.2021 CN 202110008191
(71) Applicant: Datang Mobile Communications Equipment Co., Ltd., Beijing 100085 (CN)
(72) Inventor: ZHAO, Yali, Beijing 100085 (CN)
(74) Representative: dompatent von Kreisler Selting Werner - Partnerschaft von Patent- und Rechtsanwälten mbB
(86) International application number: PCT/CN2021/142703
(87) International publication number: WO 2022/148288

(57) **Abstract**

The present disclosure discloses a timer maintenance method, device of a sidelink interface and a readable storage medium. The method includes maintaining a discontinuous reception related timer of a sidelink interface according to sidelink interface control information received by a sidelink interface receiving terminal on the sidelink interface; the SCI is sent by a sidelink interface transmitting terminal.

## Description

### CROSS-REFERENCE TO RELATED APPLICATION

This application claims priorities of the Chinese patent application No. 202110008191.6 filed on January 5, 2021, which are incorporated herein by reference in their entireties.

### TECHNICAL FIELD

The present disclosure relates to the field of communication technology, in particular to a sidelink timer maintenance and device, and a readable storage medium.

### BACKGROUND

For a cellular network, since the terminal is not sure when the base station will schedule itself, a common working mode is that the terminal continuously monitors the control channel, and monitors each subframe containing the downlink scheduling control channel to determine whether the terminal is scheduled. This working method is more applicable when the terminal has frequent data transmission, but it is not applicable when the arrival interval of the current service data packets of the terminal is relatively large. If the arrival interval of the current service data packets of the terminal is relatively large and the terminal continuously monitors the control channel, it will increase the power consumption of the terminal. In view of this situation, the cellular network communication system adopts the Discontinuous Reception (DRX) working mode. In this working mode, the terminal periodically monitors the control channel to save power.

The DRX of the current wireless communication system is only applicable to the wireless interface (User Equipment-Evolved Universal Terrestrial Radio Access Network, Uu) between the terminal and the network device, and currently no power-saving mechanism is supported for the sidelink interface. At present, the mainstream view in the industry is to introduce the Discontinuous Transmission (DTX)/DRX mechanism for the sidelink interface. However, since the scheduling method of the sidelink interface is different from that of the Uu interface, there is no solution on how to implement the DTX/DRX timer maintenance after the sidelink interface introduces the DRX mechanism.

### SUMMARY

The present disclosure aims to provide a sidelink timer maintenance method, device and a readable storage medium, so as to solve the problem of timer maintenance after the sidelink interface introduces DTX/DRX.

An embodiment of the present disclosure provides a timer maintenance method of a sidelink interface, including: maintaining a discontinuous reception (DRX)-related timer of the sidelink interface according to sidelink interface control information (SCI) received by a sidelink interface receiving terminal on the sidelink interface; wherein the SCI is sent by a sidelink interface transmitting terminal.

Optionally, the maintaining a DRX related timer of the sidelink interface according to SCI received by a sidelink interface receiving terminal on the sidelink interface includes: determining a length of the DRX-related timer of the sidelink interface according to the SCI received by the sidelink interface receiving terminal on the sidelink interface, wherein the DRX-related timer includes: a DRX Hybrid Automatic Repeat Request (HARQ) round-trip delay (RTT) timer; and/or maintaining start and/or stop of the DRX-related timer of the sidelink interface according to the SCI received by the sidelink interface receiving terminal on the sidelink interface, wherein the DRX-related timer includes: at least one of a DRX HARQ retransmission timer, the DRX HARQ RTT timer, or a DRX inactivity timer.

Optionally, the maintaining start of the DRX HARQ retransmission timer of the sidelink interface according to the SCI received by the sidelink interface receiving terminal on the sidelink interface includes the following items: for a target HARQ process, starting the DRX HARQ retransmission timer corresponding to the target HARQ process at a time domain start position of each retransmission resource corresponding to retransmission resource reservation information carried by the SCI corresponding to the target HARQ process; for the target HARQ process, determining a target time domain position according to a first time domain position of the HARQ process and a minimum time interval between two adjacent transmissions of the target HARQ process, and starting the DRX HARQ retransmission timer corresponding to the target HARQ process at the target time domain position, wherein the first time domain position is a time domain start position of SCI or physical layer direct link shared channel (PSSCH) corresponding to a last transmission of the target HARQ process; for the target HARQ process, in the case that the SCI carries the retransmission resource reservation information, starting the DRX HARQ retransmission timer corresponding to the target HARQ process at a time domain start position of each retransmission resource corresponding to the retransmission resource reservation information carried by the SCI; in the case that the SCI does not carry the retransmission resource reservation information, determining the target time domain position according to the first time domain position of the HARQ process and the minimum time interval between two adj acent transmissions of the target HARQ process, and starting the DRX HARQ retransmission timer corresponding to the target HARQ process at the target time domain position, wherein the first time domain position is the time domain position corresponding to the last transmission of the target HARQ process; for the target HARQ process, starting the DRX HARQ retransmission timer corresponding to the target HARQ process after a time domain position where the HARQ RTT timer corresponding to the target HARQ process times out or stops.

Optionally, the maintaining stop of the DRX HARQ RTT timer of the sidelink interface according to the SCI received by the sidelink interface receiving terminal on the sidelink interface includes: for a target HARQ process, before a time domain position corresponding to first target information carried by the SCI, stopping the DRX HARQ RTT timer corresponding to the target HARQ process; wherein the first target information includes: one of initial transmission resource indication information, initial transmission resource reservation information, retransmission resource indication information, and retransmission resource reservation information.

Optionally, the maintaining start of the DRX HARQ RTT timer corresponding to the sidelink interface according to the SCI received by the sidelink interface receiving terminal on the sidelink interface includes one of the following items: for a target HARQ process, starting the DRX HARQ RTT timer corresponding to the target HARQ process after an end time of PSSCH scheduled by the SCI; for the target HARQ process, starting the DRX HARQ RTT timer corresponding to the target HARQ process after an end time of physical layer direct link feedback channel (PSFCH) corresponding to the target HARQ process, wherein the end time of the PSFCH is determined according to the SCI; for the target HARQ process, in the case that the PSFCH feedback corresponding to the target HARQ process is negative acknowledgment (NACK), starting the DRX HARQ RTT timer corresponding to the target HARQ process after the end time of the PSFCH corresponding to the target HARQ process, wherein the end time of the PSFCH is determined according to the SCI.

Optionally, the maintaining start of the DRX inactivity timer of the sidelink interface according to the SCI received by the sidelink interface receiving terminal on the sidelink interface includes one of the following items: starting the DRX inactivity timer at a time domain start position of an initial transmission resource corresponding to second target information carried by the SCI; if an on Duration timer of the sidelink interface is in an operation state, starting the DRX inactivity timer at the time domain start position of the initial transmission resource corresponding to the second target information carried by the SCI; wherein, the second target information is initial transmission resource reservation information or initial transmission resource indication information.

Optionally, the maintaining the DRX-related timer of the sidelink interface according to the SCI received by the sidelink interface receiving terminal on the sidelink interface includes: after a DRX mechanism of the sidelink interface is enabled, maintaining the DRX-related timer of the sidelink interface according to the SCI.

Optionally, the method further includes: in the case that the DRX mechanism of the sidelink interface is enabled, deactivating functions of resource re-evaluation and resource reselection of the sidelink interface.

An embodiment of the present disclosure provides a timer maintenance method of a sidelink interface, including: maintaining a discontinuous transmission (DTX)-related timer of the sidelink interface according to sidelink interface control information (SCI) sent by a sidelink interface transmitting terminal on the sidelink interface.

Optionally, the maintaining a DTX related timer of the sidelink interface according to SCI sent by a sidelink interface transmitting terminal on the sidelink interface includes: maintaining start and/or stop of the DTX-related timer of the sidelink interface according to the SCI sent by the sidelink interface transmitting terminal on the sidelink interface; wherein the DTX-related timer includes: at least one of a DTX HARQ retransmission timer, a DTX HARQ RTT timer, or a DTX inactivity timer.

Optionally, the maintaining start of the DTX HARQ retransmission timer of the sidelink interface according to the SCI sent by the sidelink interface transmitting terminal on the sidelink interface includes the following items: for a target HARQ process, starting the DTX HARQ retransmission timer corresponding to the target HARQ process at a time domain start position of each retransmission resource corresponding to retransmission resource reservation information carried by the SCI corresponding to the target HARQ process; for the target HARQ process, determining a target time domain position according to a first time domain position of the HARQ process and a minimum time interval between two adjacent transmissions of the target HARQ process, and starting the DTX HARQ retransmission timer corresponding to the target HARQ process at the target time domain position; wherein the first time domain position is a time domain start position of SCI or physical layer direct link shared channel (PSSCH) corresponding to a last transmission of the target HARQ process; for the target HARQ process, in the case that the SCI carries the retransmission resource reservation information, starting the DTX HARQ retransmission timer corresponding to the target HARQ process at a time domain start position of each retransmission resource corresponding to the retransmission resource reservation information carried by the SCI; in the case that the SCI does not carry the retransmission resource reservation information, determining the target time domain position according to the first time domain position of the HARQ process and the minimum time interval between two adj acent transmissions of the target HARQ process, and starting the DTX HARQ retransmission timer corresponding to the target HARQ process at the target time domain position, wherein the first time domain position is the time domain position corresponding to the last transmission of the target HARQ process; for the target HARQ process, starting the DTX HARQ retransmission timer corresponding to the target HARQ process after a time domain position where the HARQ RTT timer corresponding to the target HARQ process times out or stops.

Optionally, the maintaining stop of the DTX HARQ RTT timer of the sidelink interface according to the SCI sent by the sidelink interface transmitting terminal on the sidelink interface includes: for a target HARQ process, before a time domain position corresponding to first target information carried by the SCI, stopping the DTX HARQ RTT corresponding to the target HARQ process; wherein the first target information includes: one of initial transmission resource indication information, initial transmission resource reservation information, retransmission resource indication information, and retransmission resource reservation information.

Optionally, the maintaining start of the DTX HARQ RTT timer corresponding to the sidelink interface according to the SCI sent by the sidelink interface transmitting terminal on the sidelink interface includes the following items: for a target HARQ process, starting the DTX HARQ RTT timer corresponding to the target HARQ process after an end time of PSSCH scheduled by the SCI; for the target HARQ process, starting the DTX HARQ RTT timer corresponding to the target HARQ process after an end time of physical layer direct link feedback channel (PSFCH) corresponding to the target HARQ process, wherein the end time of the PSFCH is determined according to the SCI; for the target HARQ process, in the case that the PSFCH feedback corresponding to the target HARQ process is negative acknowledgment (NACK), starting the DTX HARQ RTT timer corresponding to the target HARQ process after the end time of the PSFCH corresponding to the target HARQ process, wherein the end time of the PSFCH is determined according to the SCI.

Optionally, the maintaining start of the DTX inactivity timer of the sidelink interface according to the SCI sent by the sidelink interface transmitting terminal on the sidelink interface include the following items: starting the DTX inactivity timer at a time domain start position of an initial transmission resource corresponding to second target information carried by the SCI; if an on Duration timer of the sidelink interface is in an operation state, starting the DTX inactivity timer at the time domain start position of the initial transmission resource corresponding to the second target information carried by the SCI; wherein the second target information is initial transmission resource reservation information or initial transmission resource indication information.

Optionally, the maintaining the DTX-related timer of the sidelink interface according to the SCI sent by the sidelink interface transmitting terminal on the sidelink interface includes: after a DTX mechanism of the sidelink interface is enabled, maintaining the DTX-related timer of the sidelink interface according to the SCI.

Optionally, the method further includes: in the case that the DTX mechanism of the sidelink interface is enabled, deactivating functions of resource re-evaluation and resource reselection of the sidelink interface.

An embodiment of the present disclosure provides a timer maintenance device of a sidelink interface, including: a memory, a transceiver, and a processor; the processor is used to read a computer program in the memory and perform the following operations: maintaining a discontinuous reception (DRX)-related timer of the sidelink interface according to sidelink interface control information (SCI) received by a sidelink interface receiving terminal on the sidelink interface; wherein the SCI is sent by a sidelink interface transmitting terminal.

Optionally, the maintaining a DRX related timer of the sidelink interface according to SCI received by a sidelink interface receiving terminal on the sidelink interface includes: determining a length of the DRX-related timer of the sidelink interface according to the SCI received by the sidelink interface receiving terminal on the sidelink interface, wherein the DRX-related timer includes: a DRX Hybrid Automatic Repeat Request (HARQ) round-trip delay (RTT) timer; and/or maintaining start and/or stop of the DRX-related timer of the sidelink interface according to the SCI received by the sidelink interface receiving terminal on the sidelink interface, wherein the DRX-related timer includes: at least one of a DRX HARQ retransmission timer, the DRX HARQ RTT timer, or a DRX inactivity timer.

Optionally, the maintaining start of the DRX HARQ retransmission timer of the sidelink interface according to the SCI received by the sidelink interface receiving terminal on the sidelink interface includes the following items: for a target HARQ process, starting the DRX HARQ retransmission timer corresponding to the target HARQ process at a time domain start position of each retransmission resource corresponding to retransmission resource reservation information carried by the SCI corresponding to the target HARQ process; for the target HARQ process, determining a target time domain position according to a first time domain position of the HARQ process and a minimum time interval between two adjacent transmissions of the target HARQ process, and starting the DRX HARQ retransmission timer corresponding to the target HARQ process at the target time domain position, wherein the first time domain position is a time domain start position of SCI or physical layer direct link shared channel (PSSCH) corresponding to a last transmission of the target HARQ process; for the target HARQ process, in the case that the SCI carries the retransmission resource reservation information, starting the DRX HARQ retransmission timer corresponding to the target HARQ process at a time domain start position of each retransmission resource corresponding to the retransmission resource reservation information carried by the SCI; in the case that the SCI does not carry the retransmission resource reservation information, determining the target time domain position according to the first time domain position of the HARQ process and the minimum time interval between two adj acent transmissions of the target HARQ process, and starting the DRX HARQ retransmission timer corresponding to the target HARQ process at the target time domain position, wherein the first time domain position is the time domain position corresponding to the last transmission of the target HARQ process; for the target HARQ process, starting the DRX HARQ retransmission timer corresponding to the target HARQ process after a time domain position where the HARQ RTT timer corresponding to the target HARQ process times out or stops.

Optionally, the maintaining stop of the DRX HARQ RTT timer of the sidelink interface according to the SCI received by the sidelink interface receiving terminal on the sidelink interface includes: for a target HARQ process, before a time domain position corresponding to first target information carried by the SCI, stopping the DRX HARQ RTT timer corresponding to the target HARQ process; wherein the first target information includes: one of initial transmission resource indication information, initial transmission resource reservation information, retransmission resource indication information, and retransmission resource reservation information.

Optionally, the maintaining start of the DRX HARQ RTT timer corresponding to the sidelink interface according to the SCI received by the sidelink interface receiving terminal on the sidelink interface includes one of the following items: for a target HARQ process, starting the DRX HARQ RTT timer corresponding to the target HARQ process after an end time of PSSCH scheduled by the SCI; for the target HARQ process, starting the DRX HARQ RTT timer corresponding to the target HARQ process after an end time of physical layer direct link feedback channel (PSFCH) corresponding to the target HARQ process, wherein the end time of the PSFCH is determined according to the SCI; for the target HARQ process, in the case that the PSFCH feedback corresponding to the target HARQ process is negative acknowledgment (NACK), starting the DRX HARQ RTT timer corresponding to the target HARQ process after the end time of the PSFCH corresponding to the target HARQ process, wherein the end time of the PSFCH is determined according to the SCI.

Optionally, the maintaining start of the DRX inactivity timer of the sidelink interface according to the SCI received by the sidelink interface receiving terminal on the sidelink interface includes one of the following items: starting the DRX inactivity timer at a time domain start position of an initial transmission resource corresponding to second target information carried by the SCI; if an on Duration timer of the sidelink interface is in an operation state, starting the DRX inactivity timer at the time domain start position of the initial transmission resource corresponding to the second target information carried by the SCI; wherein, the second target information is initial transmission resource reservation information or initial transmission resource indication information.

Optionally, the maintaining the DRX-related timer of the sidelink interface according to the SCI received by the sidelink interface receiving terminal on the sidelink interface includes: after a DRX mechanism of the sidelink interface is enabled, maintaining the DRX-related timer of the sidelink interface according to the SCI.

Optionally, the processor is further configured to implement the following operation: in the case that the DRX mechanism of the sidelink interface is enabled, deactivating functions of resource re-evaluation and resource reselection of the sidelink interface.

An embodiment of the present disclosure provides a timer maintenance device of a sidelink interface, including: a memory, a transceiver, and a processor; the processor is used to read a computer program in the memory and perform the following operations: maintaining a discontinuous transmission (DTX)-related timer of the sidelink interface according to sidelink interface control information (SCI) sent by a sidelink interface transmitting terminal on the sidelink interface.

Optionally, the maintaining a DTX related timer of the sidelink interface according to SCI sent by a sidelink interface transmitting terminal on the sidelink interface includes: maintaining start and/or stop of the DTX-related timer of the sidelink interface according to the SCI sent by the sidelink interface transmitting terminal on the sidelink interface; wherein the DTX-related timer includes: at least one of a DTX HARQ retransmission timer, a DTX HARQ RTT timer, or a DTX inactivity timer.

Optionally, the maintaining start of the DTX HARQ retransmission timer of the sidelink interface according to the SCI sent by the sidelink interface transmitting terminal on the sidelink interface includes the following items: for a target HARQ process, starting the DTX HARQ retransmission timer corresponding to the target HARQ process at a time domain start position of each retransmission resource corresponding to retransmission resource reservation information carried by the SCI corresponding to the target HARQ process; for the target HARQ process, determining a target time domain position according to a first time domain position of the HARQ process and a minimum time interval between two adjacent transmissions of the target HARQ process, and starting the DTX HARQ retransmission timer corresponding to the target HARQ process at the target time domain position; wherein the first time domain position is a time domain start position of SCI or physical layer direct link shared channel (PSSCH) corresponding to a last transmission of the target HARQ process; for the target HARQ process, in the case that the SCI carries the retransmission resource reservation information, starting the DTX HARQ retransmission timer corresponding to the target HARQ process at a time domain start position of each retransmission resource corresponding to the retransmission resource reservation information carried by the SCI; in the case that the SCI does not carry the retransmission resource reservation information, determining the target time domain position according to the first time domain position of the HARQ process and the minimum time interval between two adj acent transmissions of the target HARQ process, and starting the DTX HARQ retransmission timer corresponding to the target HARQ process at the target time domain position, wherein the first time domain position is the time domain position corresponding to the last transmission of the target HARQ process; for the target HARQ process, starting the DTX HARQ retransmission timer corresponding to the target HARQ process after a time domain position where the HARQ RTT timer corresponding to the target HARQ process times out or stops.

Optionally, the maintaining stop of the DTX HARQ RTT timer of the sidelink interface according to the SCI sent by the sidelink interface transmitting terminal on the sidelink interface includes: for a target HARQ process, before a time domain position corresponding to first target information carried by the SCI, stopping the DTX HARQ RTT corresponding to the target HARQ process; wherein the first target information includes: one of initial transmission resource indication information, initial transmission resource reservation information, retransmission resource indication information, and retransmission resource reservation information.

Optionally, the maintaining start of the DTX HARQ RTT timer corresponding to the sidelink interface according to the SCI sent by the sidelink interface transmitting terminal on the sidelink interface includes the following items: for a target HARQ process, starting the DTX HARQ RTT timer corresponding to the target HARQ process after an end time of PSSCH scheduled by the SCI; for the target HARQ process, starting the DTX HARQ RTT timer corresponding to the target HARQ process after an end time of physical layer direct link feedback channel (PSFCH) corresponding to the target HARQ process, wherein the end time of the PSFCH is determined according to the SCI; for the target HARQ process, in the case that the PSFCH feedback corresponding to the target HARQ process is negative acknowledgment (NACK), starting the DTX HARQ RTT timer corresponding to the target HARQ process after the end time of the PSFCH corresponding to the target HARQ process, wherein the end time of the PSFCH is determined according to the SCI.

Optionally, the maintaining start of the DTX inactivity timer of the sidelink interface according to the SCI sent by the sidelink interface transmitting terminal on the sidelink interface include the following items: starting the DTX inactivity timer at a time domain start position of an initial transmission resource corresponding to second target information carried by the SCI; if an on Duration timer of the sidelink interface is in an operation state, starting the DTX inactivity timer at the time domain start position of the initial transmission resource corresponding to the second target information carried by the SCI; wherein the second target information is initial transmission resource reservation information or initial transmission resource indication information.

Optionally, the maintaining the DTX-related timer of the sidelink interface according to the SCI sent by the sidelink interface transmitting terminal on the sidelink interface includes: after a DTX mechanism of the sidelink interface is enabled, maintaining the DTX-related timer of the sidelink interface according to the SCI.

Optionally, the processor is further configured to implement the following operation: in the case that the DTX mechanism of the sidelink interface is enabled, deactivating functions of resource re-evaluation and resource reselection of the sidelink interface.

An embodiment of the present disclosure provides a timer maintenance device of a sidelink interface, including: a first processing unit, configured to maintain a discontinuous reception (DRX)-related timer of the sidelink interface according to sidelink interface control information (SCI) received by a sidelink interface receiving terminal on the sidelink interface; wherein the SCI is sent by a sidelink interface transmitting terminal.

Optionally, the first processing unit comprises: a first determination subunit, configured to determine a length of the DRX-related timer of the sidelink interface according to the SCI received by the sidelink interface receiving terminal on the sidelink interface, wherein the DRX-related timer includes: a DRX Hybrid Automatic Repeat Request (HARQ) round-trip delay (RTT) timer; and/or a first maintenance subunit, configured to maintain start and/or stop of the DRX-related timer of the sidelink interface according to the SCI received by the sidelink interface receiving terminal on the sidelink interface, wherein the DRX-related timer includes: at least one of a DRX HARQ retransmission timer, the DRX HARQ RTT timer, or a DRX inactivity timer.

Optionally, the first maintenance subunit comprises one of the following: a first start subunit, configured to, for a target HARQ process, start the DRX HARQ retransmission timer corresponding to the target HARQ process at a time domain start position of each retransmission resource corresponding to retransmission resource reservation information carried by the SCI corresponding to the target HARQ process; a second determination subunit, configured to, for the target HARQ process, determine a target time domain position according to a first time domain position of the HARQ process and a minimum time interval between two adjacent transmissions of the target HARQ process, and start the DRX HARQ retransmission timer corresponding to the target HARQ process at the target time domain position, wherein the first time domain position is a time domain start position of SCI or physical layer direct link shared channel (PSSCH) corresponding to a last transmission of the target HARQ process; a first processing subunit, configured to, for the target HARQ process, in the case that the SCI carries the retransmission resource reservation information, start the DRX HARQ retransmission timer corresponding to the target HARQ process at a time domain start position of each retransmission resource corresponding to the retransmission resource reservation information carried by the SCI; in the case that the SCI does not carry the retransmission resource reservation information, determine the target time domain position according to the first time domain position of the HARQ process and the minimum time interval between two adjacent transmissions of the target HARQ process, and start the DRX HARQ retransmission timer corresponding to the target HARQ process at the target time domain position, wherein the first time domain position is the time domain position corresponding to the last transmission of the target HARQ process; a second starting subunit, configured to, for the target HARQ process, start the DRX HARQ retransmission timer corresponding to the target HARQ process after a time domain position where the HARQ RTT timer corresponding to the target HARQ process times out or stops.

Optionally, the first maintenance subunit comprises: a first stop subunit, configured to, for a target HARQ process, before a time domain position corresponding to first target information carried by the SCI, stop the DRX HARQ RTT timer corresponding to the target HARQ process; wherein the first target information includes: one of initial transmission resource indication information, initial transmission resource reservation information, retransmission resource indication information, and retransmission resource reservation information.

Optionally, the first maintenance subunit comprises one of the following: a third start subunit, configured to, for a target HARQ process, start the DRX HARQ RTT timer corresponding to the target HARQ process after an end time of PSSCH scheduled by the SCI; a fourth start subunit, configured to, for the target HARQ process, start the DRX HARQ RTT timer corresponding to the target HARQ process after an end time of physical layer direct link feedback channel (PSFCH) corresponding to the target HARQ process, wherein the end time of the PSFCH is determined according to the SCI; a fifth start subunit, configured to, for the target HARQ process, in the case that the PSFCH feedback corresponding to the target HARQ process is negative acknowledgment (NACK), start the DRX HARQ RTT timer corresponding to the target HARQ process after the end time of the PSFCH corresponding to the target HARQ process, wherein the end time of the PSFCH is determined according to the SCI.

Optionally, the first maintenance subunit comprises one of the following: a sixth start subunit, configured to start the DRX inactivity timer at a time domain start position of an initial transmission resource corresponding to second target information carried by the SCI; a seventh start subunit, configured to, if an on Duration timer of the sidelink interface is in an operation state, start the DRX inactivity timer at the time domain start position of the initial transmission resource corresponding to the second target information carried by the SCI; wherein, the second target information is initial transmission resource reservation information or initial transmission resource indication information.

Optionally, the first processing unit comprises: a second maintenance subunit, configured to, after a DRX mechanism of the sidelink interface is enabled, maintain the DRX-related timer of the sidelink interface according to the SCI.

Optionally, the device further includes: a first activation unit, configured to, in the case that the DRX mechanism of the sidelink interface is enabled, deactivate functions of resource re-evaluation and resource reselection of the sidelink interface.

An embodiment of the present disclosure provides a timer maintenance device of a sidelink interface, including: a second processing unit, configured to maintain a discontinuous transmission (DTX)-related timer of the sidelink interface according to sidelink interface control information (SCI) sent by a sidelink interface transmitting terminal on the sidelink interface.

Optionally, the second processing unit comprises: a third maintenance subunit, configured to maintain start and/or stop of the DTX-related timer of the sidelink interface according to the SCI sent by the sidelink interface transmitting terminal on the sidelink interface; wherein the DTX-related timer includes: at least one of a DTX HARQ retransmission timer, a DTX HARQ RTT timer, or a DTX inactivity timer.

Optionally, the third maintenance subunit comprises one of the following: an eighth start subunit, configured to, for a target HARQ process, start the DTX HARQ retransmission timer corresponding to the target HARQ process at a time domain start position of each retransmission resource corresponding to retransmission resource reservation information carried by the SCI corresponding to the target HARQ process; a third determination subunit, configured to, for the target HARQ process, determine a target time domain position according to a first time domain position of the HARQ process and a minimum time interval between two adjacent transmissions of the target HARQ process, and start the DTX HARQ retransmission timer corresponding to the target HARQ process at the target time domain position; wherein the first time domain position is a time domain start position of SCI or physical layer direct link shared channel (PSSCH) corresponding to a last transmission of the target HARQ process; a second processing subunit, configured to, for the target HARQ process, in the case that the SCI carries the retransmission resource reservation information, start the DTX HARQ retransmission timer corresponding to the target HARQ process at a time domain start position of each retransmission resource corresponding to the retransmission resource reservation information carried by the SCI; in the case that the SCI does not carry the retransmission resource reservation information, determine the target time domain position according to the first time domain position of the HARQ process and the minimum time interval between two adjacent transmissions of the target HARQ process, and start the DTX HARQ retransmission timer corresponding to the target HARQ process at the target time domain position, wherein the first time domain position is the time domain position corresponding to the last transmission of the target HARQ process; a ninth start subunit, configured to, for the target HARQ process, start the DTX HARQ retransmission timer corresponding to the target HARQ process after a time domain position where the HARQ RTT timer corresponding to the target HARQ process times out or stops.

Optionally, the third maintenance subunit comprises: a second stop subunit, configured to, for a target HARQ process, before a time domain position corresponding to first target information carried by the SCI, stop the DTX HARQ RTT corresponding to the target HARQ process; wherein the first target information includes: one of initial transmission resource indication information, initial transmission resource reservation information, retransmission resource indication information, and retransmission resource reservation information.

Optionally, the third maintenance subunit comprises one of the following: a tenth start subunit, configured to, for a target HARQ process, start the DTX HARQ RTT timer corresponding to the target HARQ process after an end time of PSSCH scheduled by the SCI; an eleventh start subunit, configured to, for the target HARQ process, start the DTX HARQ RTT timer corresponding to the target HARQ process after an end time of physical layer direct link feedback channel (PSFCH) corresponding to the target HARQ process, wherein the end time of the PSFCH is determined according to the SCI; a twelfth start subunit, configured to, for the target HARQ process, in the case that the PSFCH feedback corresponding to the target HARQ process is negative acknowledgment (NACK), start the DTX HARQ RTT timer corresponding to the target HARQ process after the end time of the PSFCH corresponding to the target HARQ process, wherein the end time of the PSFCH is determined according to the SCI.

Optionally, the third maintenance subunit comprises one of the following: a thirteenth start subunit, configured to start the DTX inactivity timer at a time domain start position of an initial transmission resource corresponding to second target information carried by the SCI; a fourteenth start subunit, configured to, if an on Duration timer of the sidelink interface is in an operation state, start the DTX inactivity timer at the time domain start position of the initial transmission resource corresponding to the second target information carried by the SCI; wherein the second target information is initial transmission resource reservation information or initial transmission resource indication information.

Optionally, the second processing unit comprises: a fourth maintenance subunit, configured to, after a DTX mechanism of the sidelink interface is enabled, maintain the DTX-related timer of the sidelink interface according to the SCI.

Optionally, the device further includes: a second activation unit, configured to, in the case that the DTX mechanism of the sidelink interface is enabled, deactivate functions of resource re-evaluation and resource reselection of the sidelink interface.

An embodiment of the present disclosure provides a processor-readable storage medium, storing a computer program, wherein the computer program is executed by a processor to implement the timer maintenance method.

The technical solutions of the present disclosure have the beneficial effect as follows.

In the embodiments of the present disclosure, the sidelink interface receiving terminal maintains the DRX-related timer of the sidelink interface according to the SCI received on the sidelink interface, thereby reducing the power and achieving the power save of the sidelink interface.

### BRIEF DESCRIPTION OF THE DRAWINGS

FIG. 1 shows a schematic diagram of a cellular communication network;
FIG. 2 shows a schematic diagram of the DRX process;
FIG. 3 shows a schematic diagram of sidelink (SL) communication;
FIG. 4 shows a first schematic flow chart of the timer maintenance method of the sidelink interface in an embodiment of the present disclosure;
FIG. 5 shows a second schematic flow chart of the timer maintenance method of the sidelink interface in an embodiment of the present disclosure;
FIG. 6 shows a first structural schematic diagram of the timer maintenance device of the sidelink interface according to an embodiment of the present disclosure;
FIG. 7 shows a second structural schematic diagram of the timer maintenance device of the sidelink interface in an embodiment of the present disclosure;
FIG. 8 shows a third structural schematic diagram of the timer maintenance device of the sidelink interface according to an embodiment of the present disclosure;
FIG. 9 shows a fourth structural schematic diagram of the timer maintenance device of the sidelink interface according to an embodiment of the present disclosure.

### DETAILED DESCRIPTION

In order to make the technical problems, technical solutions and advantages to be solved by the present disclosure clearer, the following will describe in detail with reference to the drawings and specific embodiments. In the following description, specific details such as specific configurations and components are provided only to help a comprehensive understanding of the embodiments of the present disclosure. Accordingly, those of ordinary skill in the art should recognize that various changes and modifications of the embodiments described herein can be made without departing from the scope and spirit of the present disclosure. Also, descriptions of well-known functions and constructions are omitted for clarity and conciseness.

It should be understood that "one embodiment" or "an embodiment" of the whole specification means that a specific feature, structure or characteristic related to the embodiment is included in at least one embodiment of the present disclosure. Thus, the words of "in one embodiment" or "in an embodiment" in various places throughout the specification are not necessarily referring to the same embodiment. Furthermore, the specific features, structures or characteristics may be combined in any suitable manner in one or more embodiments.

In various embodiments of the present disclosure, it should be understood that the sequence numbers of the following processes do not mean the order of execution, and the execution order of each process should be determined by the functions and internal logic thereof, and should not constitute limitation for the implementation of the embodiments of the present disclosure.

Additionally, the terms "system" and "network" are often used interchangeably.

The term "and/or" in the embodiments of the present disclosure describes the association relationship of associated objects, indicating that there may be three relationships, for example, A and/or B, which may mean: A exists alone, A and B exist simultaneously, and B exists alone. The character "/" generally indicates that the contextual objects are an "or" relationship.

The term "plurality" in the embodiments of the present disclosure refers to two or more, and other quantifiers are similar.

When describing the embodiments of the present disclosure, some concepts used in the following description are explained first.

### (1) Cellular network communication:

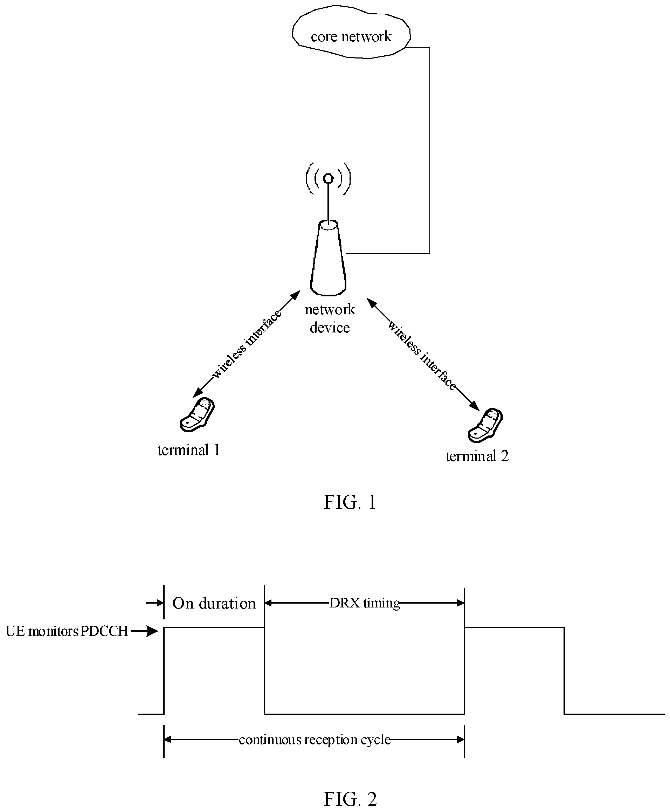

In traditional cellular network communication, uplink/downlink data and control information are transmitted between the terminal and the network side device through the Uu interface, as shown in FIG. 1.

### (2) DRX mechanism of the Uu interface of the cellular communication system:

In a mobile communication system based on shared channels, the base station scheduler is responsible for controlling the transmission of uplink and downlink data. When the scheduler decides to schedule a certain user, it will notify the terminal on which resource to send or receive data through the control channel. The terminal (User Equipment, UE) monitors the control channel, and when the terminal detects its own scheduling information, the terminal completes data transmission (uplink) or reception (downlink) according to the instructions on the control channel. Since the terminal cannot determine when the evolved base station (Evolved NodeB, eNB) will schedule itself, a common working mode is that the terminal continuously monitors the control channel to determine whether it is scheduled. This working method is more applicable when the terminal has frequent data transmission, but it is not applicable when the arrival interval of the current service data packets of the terminal is relatively large. If the arrival interval of the current service data packets of the terminal is relatively large and the terminal continuously monitors the control channel, which will increase the power consumption of the terminal. In view of this situation, the cellular network communication system adopts the DRX working mode. In this working mode, the terminal periodically monitors the control channel to achieve the purpose of power saving.

Basic principles of DRX:
The basic principle of DRX is shown in FIG. 2. The On duration indicates the time period during which the UE monitors the control channel, during which the radio frequency channel is opened and continuously monitors the control channel; except for the On duration, the UE is in a sleep state, and its radio frequency link will be closed, no longer monitor the control channel, so as to achieve the purpose of power saving. On Duration appears periodically, and the specific cycle is configured by eNB.

The DRX mechanism of the cellular network takes into account the arrival model of data services, that is, the arrival of data packets is bursty (it can be understood that once a data packet arrives, more packets will arrive continuously in a short period of time). In order to adapt to this service arrival characteristic, the Long Term Evolution (LTE) DRX process uses various timers and combines the same with the HARQ process in order to achieve better power saving performance.

DRX related timers:
drx-on Duration Timer: The time for the UE to periodically wake up and monitor the control channel, as shown in FIG. 2.

Short DRX cycle Timer: in order to better meet the characteristics of data service arrival, the cellular network communication system supports the configuration of two DRX cycles: long cycle and short cycle. The drx-on Duration Timers of the two cycles are the same, but the sleep time is different. In the short cyle, the sleep time is relatively short and the UE can listen to the control channel again sooner. The long cycle must be configured and is the initial state of the DRX process; the short cycle is optional. The short DRX cycle timer sets to adopt the duration of the short cycle. After the short DRX cycle timer times out, the UE will use the long cycle.
drx-Inactivity Timer: after DRX is configured, when the UE receives the control signaling of HARQ initial transmission within the time that the control channel is allowed to be monitored (Active Time), the timer is turned on, and before the timer times out, the UE continuously monitors the control channel. If the UE receives the HARQ initial transmission control signaling before the drx-Inactivity Timer times out, the UE will terminate and restart the drx-Inactivity Timer.

Hybrid automatic retransmission round-trip timer (HARQ RTT Timer): it is divided into drx-HARQ-RTT-Timer DL and drx-HARQ-RTT-Timer UL. The purpose is to make it possible for the UE not to monitor the control channel before the next retransmission arrives, so as to achieve a better power saving effect. The following behavior is an example, the first symbol after transmitting the physical uplink control channel (PUCCH) of the UE related process starts, and this timer will be turned on. If the data in the corresponding HARQ process is unsuccessfully decoded after the previous HARQ transmission (the UE feedbacks NACK), after the DL HARQ RTT Timer times out, the UE turns on the drx-Retransmission Timer DL. If the data in the corresponding HARQ process is successfully decoded after the previous HARQ transmission (UE feedback ACK), after the drx-HARQ-RTT-TimerDL timer times out, the UE does not start drx-Retransmission Timer DL. If only drx-HARQ-RTT-Timer DL is currently in operation, the UE does not monitor the control channel.

Hybrid automatic retransmission request timer (HARQ retransmission Timer): it is divided into drx-Retransmission Timer DL or drx-Retransmission Timer UL. The following behavior is an example. During the operation of the DL HARQ retransmission Timer, the UE monitors the control signaling and waits for the retransmission scheduling of the corresponding HARQ process.

### Active time definition under DRX:

In On duration Timer, HARQ retransmission Timer and Inactivity Timer, if any timer is in operation, the UE will monitor the control channel. The time during which the UE monitors the control channel is also called Active Time. In the LTE system, Active Time is affected by the DRX timer and other factors. Active Time can include the following time:

Operation time of Drx-on Duration Timer or drx-Inactivity Timer or drx-Retransmission Timer DL or drx-Retransmission Timer UL or ra-ContentionResolution Timer;

The time for the UE to wait for the base station to send the physical downlink control channel (PDCCH) after sending the uplink scheduling request (SR);

The time for the non-contention random access UE to wait for the PDCCH scheduled by the cell radio network temporary identifier (C-RNTI) after receiving the random access response (RAR).

### (3) Sidelink:

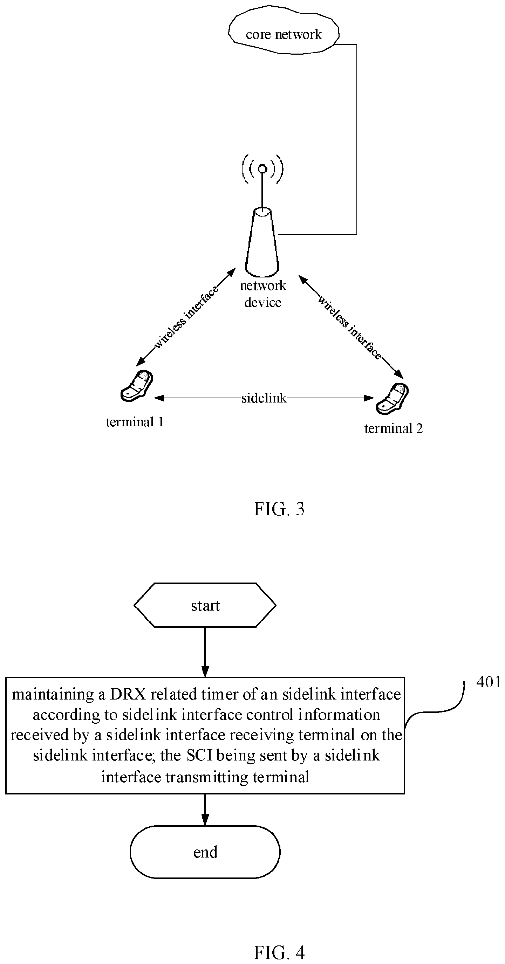

Sidelink refers to a mode that adjacent terminals can transmit data through a sidelink (also called a bypass) within a short distance. The wireless interface corresponding to the Sidelink is called a sidelink interface, also known as Sidelink interface or bypass interface, as shown in FIG. 3.

The sidelink interface scheduling is realized through the sidelink interface scheduling information (Sidelink Control Information, SCI), which is different from the Uu interface downlink control information (DCI) in that the sidelink interface SCI can include resource reservation indication information for the initial transmission and/or retransmission of the sidelink interface.

Specifically, the embodiments of the present disclosure provide a timer maintenance method of a sidelink interface, which is used to solve the problem of timer maintenance after the sidelink interface introduces DTX/DRX.

As shown in FIG. 4, the embodiment of the present disclosure provides a timer maintenance method for a sidelink interface, which specifically includes the following steps:
Step 401: maintaining a discontinuous reception (DRX) related timer of an sidelink interface according to sidelink interface control information (SCI) received by a sidelink interface receiving terminal on the sidelink interface; the SCI being sent by a sidelink interface transmitting terminal.

The method embodiment may be applied to a sidelink interface receiving terminal. The receiving terminal maintains the DRX-related timer according to the SCI information received on the sidelink interface. The SCI may be sent by the sidelink interface transmitting terminal. The working state includes a start state and/or a stop state, that is, the maintaining the DRX-related timer may include: maintaining the start of the DRX-related timer and/or maintaining the stop of the DRX-related timer.

In the embodiment of the present disclosure, the sidelink interface receiving terminal maintains the DRX-related timer of the sidelink interface according to the SCI received on the sidelink interface, and reduces power consumption, thereby realizing power saving of the sidelink interface.

Further, the maintaining a DRX related timer of an sidelink interface according to SCI received by a sidelink interface receiving terminal on the sidelink interface includes:

Maintaining start and/or stop of the DRX-related timer of the sidelink interface according to the SCI received by the sidelink interface receiving terminal on the sidelink interface; wherein the DRX-related timer includes: at least one of a DRX HARQ retransmission timer, a DRX HARQ RTT timer, or a DRX inactivity timer.

The DRX HARQ retransmission timer is used to define the longest time that HARQ retransmission may occur;

The DRX HARQ RTT timer is used to define the minimum time expected for HARQ retransmission to occur:
The DRX inactivity timer is used to define the extended time of the Active Time after the receiving terminal receives the SCI.

The methods for maintaining the DRX HARQ retransmission timer, the DRX HARQ RTT timer, and the DRX inactivity timer are respectively described below through embodiments.

For the DRX HARQ retransmission timer, specifically, the maintaining the start of the DRX HARQ retransmission timer of the sidelink interface according to the SCI received by the sidelink interface receiving terminal on the sidelink interface may include the following items:
1) For the target HARQ process, starting the DRX HARQ retransmission timer corresponding to the target HARQ process at a time domain start position of each retransmission resource corresponding to retransmission resource reservation information carried by the SCI corresponding to the target HARQ process.
   For each HARQ process, the DTX HARQ retransmission timer of the sidelink interface corresponding to the HARQ process is started at the time domain start position of each retransmission resource corresponding to the retransmission resource reservation information according to the retransmission resource reservation information carried by the SCI received by the receiving terminal. For example: the DRX HARQ retransmission timer is started at the first (Orthogonal frequency division multiplex, OFDM) symbol of each retransmission resource corresponding to the retransmission resource reservation information.
2) For the target HARQ process, determining the target time domain position according to the first time domain position of the HARQ process and the minimum time interval between two adjacent transmissions of the target HARQ process, and starting the DRX HARQ retransmission timer corresponding to the target HARQ process at the target time domain position, wherein the first time domain position is a time domain start position of the SCI or the physical layer direct link shared channel (PSSCH) corresponding to the last transmission of the target HARQ process.
   The minimum time interval between two adjacent transmissions may be the minimum time interval between two sidelink grants defined in the protocol. In this embodiment, for each HARQ process, the receiving terminal determines the time domain position where the DRX HARQ retransmission timer of the sidelink interface corresponding to the HARQ process starts according to the time domain start position of the SCI or PSSCH corresponding to the last transmission of the HARQ process and the minimum time interval between two Sidelink grants defined in the protocol, and starts the DRX HARQ retransmission timer at the time domain position.
3) for the target HARQ process, in the case that the SCI carries the retransmission resource reservation information, starting the DRX HARQ retransmission timer corresponding to the target HARQ process at a time domain start position of each retransmission resource corresponding to the retransmission resource reservation information carried by the SCI; in the case that the SCI does not carry the retransmission resource reservation information, determining the target time domain position according to the first time domain position of the HARQ process and the minimum time interval between two adj acent transmissions of the target HARQ process, and starting the DRX HARQ retransmission timer corresponding to the target HARQ process at the target time domain position, wherein the first time domain position is the time domain position corresponding to the last transmission of the target HARQ process.

For each HARQ process, if the SCI received by the receiving terminal carries retransmission resource reservation information, starting the DRX HARQ retransmission timer at the time domain start position (for example, the first OFDM symbol) of each retransmission resource corresponding to the retransmission resource reservation information according to the retransmission resource reservation information carried in the SCI; if the SCI received by the receiving terminal does not carry the retransmission resource reservation information, determining the time domain position where the DRX HARQ retransmission timer starts according to the time domain position of the SCI or PSSCH corresponding to the last transmission of the same HARQ process, and the minimum time interval between two Sidelink grants defined in the protocol.

It should be noted that, in the above steps 1) to 3), the start time of the sidelink interface DRX HARQ retransmission timer is related to the SCI.

Optionally, the start time of the DRX HARQ retransmission timer may also be related to the timeout of the DRX HARQ RTT timer. Specifically, the maintaining the start of the DRX HARQ retransmission timer of the sidelink interface according to the SCI received by the sidelink interface receiving terminal on the sidelink interface may include:
4) For the target HARQ process, starting the DRX HARQ retransmission timer corresponding to the target HARQ process after a time domain position where the HARQ RTT timer corresponding to the target HARQ process times out or stops.

In this embodiment, the time domain position where the HARQ RTT timer times out or stops can be determined according to the SCI received by the receiving terminal on the sidelink interface. For example, after the HARQ RTT timer corresponding to the target HARQ process times out, the DRX HARQ retransmission timer may be started at the first OFDM symbol after the timeout.

In this embodiment, by maintaining the start of the DRX HARQ retransmission timer, the receiving terminal only monitors the control signaling during the operation of the DRX HARQ retransmission timer, and waits for the retransmission scheduling corresponding to the target HARQ process. Continuous monitoring is not necessary and power can be effectively reduced.

For the DRX HARQ RTT timer, specifically, maintaining the stop of the DRX HARQ RTT timer of the sidelink interface according to the SCI received by the sidelink interface receiving terminal on the sidelink interface may include:

For the target HARQ process, before the time domain position corresponding to the first target information carried by the SCI, stopping the DRX HARQ RTT timer corresponding to the target HARQ process; wherein the first target information includes: one of initial transmission resource indication information, initial transmission resource reservation information, retransmission resource indication information, and retransmission resource reservation information.

In this embodiment, the DRX HARQ RTT timer is maintained for each HARQ process of the sidelink interface. Optionally, the DRX HARQ retransmission timer may also be maintained according to the DRX HARQ RTT timer. The maintenance of the DRX HARQ RTT timer is related to the SCI received by the receiving terminal on the sidelink interface.

For the sidelink receiving terminal, for the reception of the sidelink interface, the sidelink interface DRX HARQ RTT timer corresponding to the target HARQ process is stopped before the time domain position (For example, the end moment of the last OFDM symbol before the time domain position) of the resource corresponding to the initial transmission resource indication information, or the initial transmission resource reservation information, or the retransmission resource indication information, or retransmission resource reservation information, according to the initial transmission resource indication information, or the initial transmission resource reservation information, or the retransmission resource indication information, or retransmission resource reservation information carried in the SCI received by the receiving terminal on sidelink interface.

Optionally, when the DRX HARQ RTT timer times out, a DRX HARQ retransmission timer corresponding to the target HARQ process may be started. The maintenance method of the DRX HARQ retransmission timer is the same as that of step 4), and will not be repeated here.

For the start of the DRX HARQ RTT timer, specifically, the maintaining the start of the DRX HARQ RTT timer corresponding to the sidelink interface according to the SCI received by the sidelink interface receiving terminal on the sidelink interface may include the following items:
A) For the target HARQ process, starting the DRX HARQ RTT timer corresponding to the target HARQ process after the end time of the PSSCH scheduled by the SCI.
   For each HARQ process, DRX HARQ RTT timer of the sidelink interface corresponding to the HARQ process is started after the end time of the PSSCH scheduled by the SCI (for example, the first OFDM symbol after the end time) according to the SCI received by the receiving terminal on the sidelink interface.
B) For the target HARQ process, starting the DRX HARQ RTT timer corresponding to the target HARQ process after the end time of the physical layer direct link feedback channel (PSFCH) corresponding to the target HARQ process, wherein the end time of the PSFCH is determined from the SCI.
   For each HARQ process, the sidelink interface DRX HARQ RTT timer corresponding to the HARQ process can be started after the end time of the PSFCH (such as the first OFDM symbol after the end time); wherein, the PSFCH feedback of the HARQ process is determined according to the SCI received by the receiving terminal, that is, the end time of the PSFCH can be determined according to the SCI.
C) For the target HARQ process, if the PSFCH feedback corresponding to the target HARQ process is negative acknowledgment NACK, starting the DRX HARQ RTT timer corresponding to the target HARQ process after the end time of the PSFCH corresponding to the target HARQ process, wherein the end time of the PSFCH is determined according to the SCI.

For each HARQ process, if the PSFCH feedback corresponding to the HARQ process is NACK, the sidelink interface DRX HARQ RTT timer corresponding to the HARQ process can be started after the end time of the PSFCH (for example, the first OFDM symbol after the end time).

It should be noted that the start and stop of the DRX HARQ RTT timer can be maintained at the same time, or only the start of the DRX HARQ RTT timer can be maintained, or only the stop of the DRX HARQ RTT timer can be maintained.

In this embodiment, by maintaining the start and/or stop of the DRX HARQ RTT timer, the receiving terminal does not monitor the control channel until the next retransmission arrives, thereby avoiding continuous monitoring of the control channel, and effectively saving the power.

For the DRX inactivity timer, specifically, maintaining the start of the DRX inactivity timer of the sidelink interface according to the SCI received by the sidelink interface receiving terminal on the sidelink interface may include the following items:
a) Starting the DRX inactivity timer at a time domain start position of an initial transmission resource corresponding to second target information carried by the SCI; the second target information being the initial transmission resource reservation information or the initial transmission resource indication information.
   In this embodiment, the DRX inactivity timer of the sidelink interface is started at the time domain start position (for example, the first OFDM symbol) of the initial transmission resource corresponding to each initial transmission resource indication information or initial transmission resource reservation information according to the initial transmission resource indication information or initial transmission resource reservation information carried in the SCI received by the sidelink interface receiving terminal on the sidelink interface.
b) if the on Duration timer of the sidelink interface is in an operation state, starting the DRX inactivity timer at the time domain start position of the initial transmission resource corresponding to the second target information carried by the SCI; wherein, the second target information is initial transmission resource reservation information or initial transmission resource indication information.

The time domain start position (such as the first OFDM symbol) of the initial transmission resource corresponding to each initial transmission resource indication information or initial transmission resource reservation information is determined according to the initial transmission resource indication information or initial transmission resource reservation information carried in the SCI received by the sidelink interface receiving terminal on the sidelink interface; if the on Duration timer of the sidelink interface is in the operation state at the start position, starting the DRX inactivity timer on the start position.

In this embodiment, by maintaining the start of the DRX inactivity timer, the receiving terminal is enabled to start the DRX inactivity timer within the time allowed to monitor the control channel (Active Time), and the control channel is continuously monitored before the DRX inactivity timer times out, to avoid continuous monitoring of the control channel, which can effectively save power.

Optionally, maintaining the DRX-related timer of the sidelink interface according to the sidelink interface control information SCI received by the sidelink interface receiving terminal on the sidelink interface may include: after the DRX mechanism of the sidelink interface is enabled, maintaining the DRX-related timer of the sidelink interface according to the SCI. Specifically, when the DRX mechanism of the sidelink interface is enabled, the functions of resource re-evaluation and resource reselection of the sidelink interface are disabled.

It should be noted that the DRX timer in the embodiments of the present disclosure may also be called SL reception (Rx) related timer, for example: DRX HARQ retransmission timer may be called sl-Rx-drx-Retransmission Timer or sl-drx-Retransmission Timer Rx; DRX HARQ RTT timer may be called sl-Rx-drx-HARQ-RTT-Timer or sl-drx-HARQ-RTT-Timer Rx. In the case of different names, timers having the same functions as the DRX HARQ retransmission timer, DRX HARQ RTT timer and DRX inactivity timer described in the present disclosure are all within the protection scope of the present disclosure.

Embodiments of the present disclosure provide a method for maintaining a DRX timer of a sidelink interface, which can implement reasonable maintenance of the DRX timer according to the characteristics of the sidelink interface. The sidelink interface receiving terminal maintains the DRX-related timer of the sidelink interface according to the SCI received on the sidelink interface, and reduces power consumption, thereby realizing power saving of the sidelink interface.

It should be noted that, for one sidelink terminal, the DRX-related timer can be maintained only for the reception of the sidelink interface, or the DTX-related timer can be maintained only for the transmission of the sidelink interface, or the DRX-related timer can be maintained for the reception and transmission of the sidelink interface.

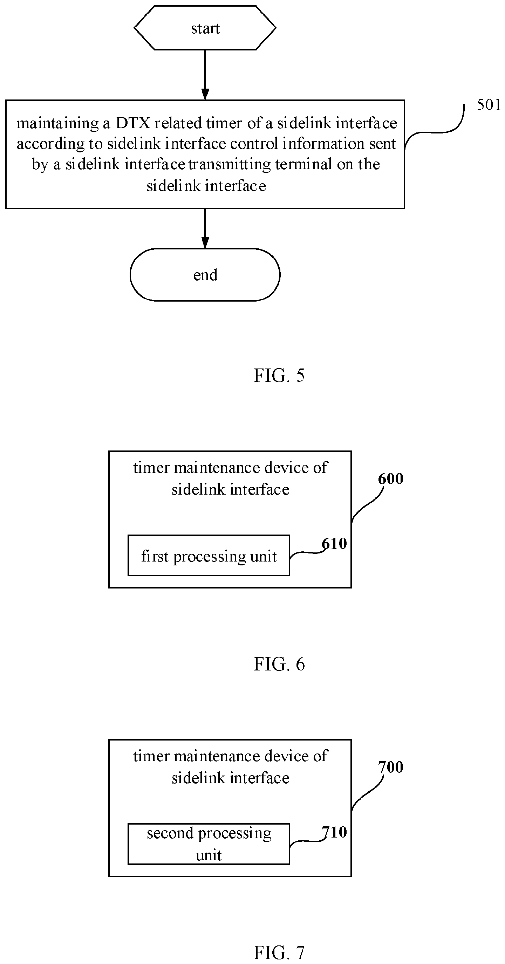

As shown in FIG. 5, the embodiment of the present disclosure provides a maintenance method of a sidelink interface timer, which specifically includes the following steps:

Step 501: maintaining a discontinuous transmission (DTX) related timer of a sidelink interface according to sidelink interface control information (SCI) sent by a sidelink interface transmitting terminal on the sidelink interface.

The method embodiment may be applied to a sidelink interface transmitting terminal. The transmitting terminal maintains the DTX-related timer according to the SCI information sent on the sidelink interface. The working state includes a start state and/or a stop state, that is, the maintaining the DTX-related timer may include: maintaining the start of the DTX-related timer and/or maintaining the stop of the DTX-related timer.

In the embodiment of the present disclosure, the sidelink interface transmitting terminal maintains the DTX-related timer of the sidelink interface according to the SCI sent on the sidelink interface, and reduces power consumption, thereby realizing power saving of the sidelink interface.

Further, the maintaining a DTX related timer of an sidelink interface according to SCI sent by a sidelink interface transmitting terminal on the sidelink interface includes:
Maintaining start and/or stop of the DTX-related timer of the sidelink interface according to the SCI sent by the sidelink interface transmitting terminal on the sidelink interface; wherein the DTX-related timer includes: at least one of a DTX HARQ retransmission timer, a DTX HARQ RTT timer, or a DTX inactivity timer.

The DTX HARQ retransmission timer is used to define the longest time that HARQ retransmission may occur;
The DTX HARQ RTT timer is used to define the minimum time expected for HARQ retransmission to occur:
The DTX inactivity timer is used to define the extended time of the Active Time after the receiving terminal receives the SCI.

The methods for maintaining the DTX HARQ retransmission timer, the DTX HARQ RTT timer, and the DTX inactivity timer are respectively described below through embodiments.

For the DTX HARQ retransmission timer, specifically, the maintaining the start of the DTX HARQ retransmission timer of the sidelink interface according to the SCI sent by the sidelink interface sneding terminal on the sidelink interface may include the following items:
1) For the target HARQ process, starting the DTX HARQ retransmission timer corresponding to the target HARQ process at a time domain start position of each retransmission resource corresponding to retransmission resource reservation information carried by the SCI corresponding to the target HARQ process.

For each HARQ process, the DTX HARQ retransmission timer of the sidelink interface corresponding to the HARQ process is started at the time domain start position (for example the first OFDM symbol) of each retransmission resource corresponding to the retransmission resource reservation information according to the retransmission resource reservation information carried in the sidelink interface SCI sent by the transmitting terminal on the sidelink interface.

(2) For the target HARQ process, determining the target time domain position according to the first time domain position of the HARQ process and the minimum time interval between two adjacent transmissions of the target HARQ process, and starting the DTX HARQ retransmission timer corresponding to the target HARQ process at the target time domain position, wherein the first time domain position is a time domain start position of the SCI or the physical layer direct link shared channel (PSSCH) corresponding to the last transmission of the target HARQ process.

The minimum time interval between two adjacent transmissions may be the minimum time interval between two sidelink grants defined in the protocol.

For each HARQ process, the time domain position where the DTX HARQ retransmission timer of the sidelink interface corresponding to the HARQ process starts is determined according to the time domain position of the SCI or PSSCH corresponding to the last transmission of the HARQ process sent by the transmitting terminal on the sidelink interface, and the minimum time interval between two Sidelink grants defined in the protocol, and the DTX HARQ retransmission timer is started at the time domain position.

(3) for the target HARQ process, in the case that the SCI carries the retransmission resource reservation information, starting the DTX HARQ retransmission timer corresponding to the target HARQ process at a time domain start position of each retransmission resource corresponding to the retransmission resource reservation information carried by the SCI; in the case that the SCI does not carry the retransmission resource reservation information, determining the target time domain position according to the first time domain position of the HARQ process and the minimum time interval between two adjacent transmissions of the target HARQ process, and starting the DTX HARQ retransmission timer corresponding to the target HARQ process at the target time domain position, wherein the first time domain position is the time domain position corresponding to the last transmission of the target HARQ process.

For each HARQ process, if the transmitting terminal carries retransmission resource reservation information in the SCI sent by the sidelink interface, starting the DTX HARQ retransmission timer at the time domain start position (for example, the first OFDM symbol) of each retransmission resource corresponding to the retransmission resource reservation information according to the retransmission resource reservation information carried in the SCI; if the transmitting terminal does not carry retransmission resource reservation information in the SCI sent by the sidelink interface, determining the time domain position where the DTX HARQ retransmission timer starts according to the time domain position of the SCI or PSSCH corresponding to the last transmission of the same HARQ process, and the minimum time interval between two Sidelink grants defined in the protocol.

It should be noted that, in the above steps (1) to (3), the start time of the sidelink interface DTX HARQ retransmission timer is related to the SCI.

The start time of the DTX HARQ retransmission timer may also be related to the timeout of the DTX HARQ RTT timer. Specifically, the maintaining the start of the DTX HARQ retransmission timer of the sidelink interface according to the SCI sent by the sidelink interface transmitting terminal on the sidelink interface may include:
4) For the target HARQ process, starting the DTX HARQ retransmission timer corresponding to the target HARQ process after a time domain position where the HARQ RTT timer corresponding to the target HARQ process times out or stops.

In this embodiment, the time domain position where the HARQ RTT timer times out or stops can be determined according to the SCI sent by the transmitting terminal on the sidelink interface. For example, after the HARQ RTT timer corresponding to the target HARQ process times out, the DTX HARQ retransmission timer may be started at the first OFDM symbol after the timeout.

In this embodiment, by maintaining the start of the DTX HARQ retransmission timer, the transmitting terminal only monitors the control signaling during the operation of the DTX HARQ retransmission timer, and waits for the retransmission scheduling corresponding to the target HARQ process. Continuous monitoring is not necessary and power can be effectively reduced.

It should be noted that a sidelink terminal may simultaneously send and receive on the sidelink interface, and the DTX and DRX related timers described in this disclosure may be maintained separately or simultaneously.

For the DTX HARQ RTT timer, specifically, maintaining the stop of the DTX HARQ RTT timer of the sidelink interface according to the SCI sent by the sidelink interface transmitting terminal on the sidelink interface may include: for the target HARQ process, before the time domain position corresponding to the first target information carried by the SCI, stopping the DRX HARQ RTT timer corresponding to the target HARQ process; wherein the first target information includes: one of initial transmission resource indication information, initial transmission resource reservation information, retransmission resource indication information, and retransmission resource reservation information.

In this embodiment, the DTX HARQ RTT timer is maintained for each HARQ process of the sidelink interface. Optionally, the DTX HARQ retransmission timer may also be maintained according to the DTX HARQ RTT timer. The maintenance of the DTX HARQ RTT timer is related to the SCI sent by the transmitting terminal on the sidelink interface.

For the sidelink transmitting terminal, for each HARQ process, the sidelink interface DTX HARQ RTT timer corresponding to the target HARQ process is stopped before the time domain position (For example, the end moment of the last OFDM symbol before the time domain position) of the resource corresponding to the initial transmission resource indication information, or the initial transmission resource reservation information, or the retransmission resource indication information, or retransmission resource reservation information, according to the initial transmission resource indication information, or the initial transmission resource reservation information, or the retransmission resource indication information, or retransmission resource reservation information carried in the SCI sent by the transmitting terminal on sidelink interface.

Optionally, when the DTX HARQ RTT timer times out, a DTX HARQ retransmission timer corresponding to the target HARQ process may be started. The maintenance method of the DTX HARQ retransmission timer is the same as that of step 4), and will not be repeated here.

For the start of the DRX HARQ RTT timer, specifically, the maintaining the start of the DRX HARQ RTT timer corresponding to the sidelink interface according to the SCI received by the sidelink interface receiving terminal on the sidelink interface may include the following items:
(i) For the target HARQ process, starting the DTX HARQ RTT timer corresponding to the target HARQ process after an end time of the PSSCH scheduled by the SCI.
   For each HARQ process, DTX HARQ RTT timer of the sidelink interface corresponding to the HARQ process is started after the end time of the PSSCH scheduled by the SCI (for example, the first OFDM symbol after the end time) according to the SCI sent by the transmitting terminal on the sidelink interface.
(ii) For the target HARQ process, starting the DTX HARQ RTT timer corresponding to the target HARQ process after the end time of the physical layer direct link feedback channel (PSFCH) corresponding to the target HARQ process, wherein the end time of the PSFCH is determined according to the SCI.
   For each HARQ process, the sidelink interface DTX HARQ RTT timer corresponding to the HARQ process can be started after the end time of the PSFCH (such as the first OFDM symbol after the end time); wherein, the PSFCH feedback of the HARQ process is determined according to the SCI sent by the transmitting terminal, that is, the end time of the PSFCH can be determined according to the SCI.
(iii) For the target HARQ process, if the PSFCH feedback corresponding to the target HARQ process is negative acknowledgment NACK, starting the DTX HARQ RTT timer corresponding to the target HARQ process after the end time of the PSFCH corresponding to the target HARQ process, wherein the end time of the PSFCH is determined according to the SCI.

For each HARQ process, if the PSFCH feedback corresponding to the HARQ process is NACK, the sidelink interface DTX HARQ RTT timer corresponding to the HARQ process can be started after the end time of the PSFCH (for example, the first OFDM symbol after the end time).

It should be noted that the start and stop of the DTX HARQ RTT timer can be maintained at the same time, or only the start of the DTX HARQ RTT timer can be maintained, or only the stop of the DTX HARQ RTT timer can be maintained.

For one sidelink terminal, DTX-related timers can be maintained only for sidelink interface transmission, DRX-related timers can be maintained only for sidelink interface reception, or DTX-related timers can be maintained separately for sidelink interface transmission and reception.

In this embodiment, by maintaining the start and/or stop of the DRX HARQ RTT timer, the receiving terminal does not monitor the control channel until the next retransmission arrives, thereby avoiding continuous monitoring of the control channel, and effectively saving the power.

For the DTX inactivity timer, specifically, maintaining the start of the DTX inactivity timer of the sidelink interface according to the SCI sent by the sidelink interface transmitting terminal may include the following items:
(I) Starting the DTX inactivity timer at a time domain start position of an initial transmission resource corresponding to second target information carried by the SCI; the second target information being the initial transmission resource reservation information or the initial transmission resource indication information.
   In this embodiment, the DTX inactivity timer of the sidelink interface is started at the time domain start position (for example, the first OFDM symbol) of the initial transmission resource corresponding to each initial transmission resource indication information or initial transmission resource reservation information according to the initial transmission resource indication information or initial transmission resource reservation information carried in the SCI sent by the sidelink interface transmitting terminal.
(II) if the on Duration timer of the sidelink interface is in an operation state, starting the DTX inactivity timer at the time domain start position of the initial transmission resource corresponding to the second target information carried by the SCI; wherein, the second target information is initial transmission resource reservation information or initial transmission resource indication information.

The time domain start position (such as the first OFDM symbol) of the initial transmission resource corresponding to each initial transmission resource indication information or initial transmission resource reservation information is determined according to the initial transmission resource indication information or initial transmission resource reservation information carried in the SCI sent by the sidelink interface transmitting terminal; if the on Duration timer of the sidelink interface is in the operation state at the start position, starting the DTX inactivity timer on the start position.

In this embodiment, by maintaining the start of the DTX inactivity timer, the transmitting terminal is enabled to start the DTX inactivity timer within the time allowed to monitor the control channel (Active Time), and the control channel is continuously monitored before the DTX inactivity timer times out, to avoid continuous monitoring of the control channel, which can effectively save power.

It should be noted that one sidelink terminal may simultaneously transmit and receive on the sidelink interface, and the DTX inactivity timer and the DRX inactivity timer may be maintained separately or simultaneously.

Optionally, maintaining the DTX-related timer of the sidelink interface according to the sidelink interface control information SCI sent by the sidelink interface transmitting terminal on the sidelink interface may include: after the DTX mechanism of the sidelink interface is enabled, maintaining the DTX-related timer of the sidelink interface according to the SCI. Specifically, when the DTX mechanism of the sidelink interface is enabled, the functions of resource re-evaluation and resource reselection of the sidelink interface are disabled.

It should be noted that the DTX-related timers in the embodiments of the present disclosure may also be called SL Tx-related timers, for example: the DTX HARQ retransmission timer may be called sl-Tx-drx-Retransmission Timer or sl-drx- Retransmission Timer Tx; DTX HARQ RTT timer can be called sl-Tx-drx-HARQ-RTT-Timer or sl-drx-HARQ-RTT-Timer Tx. In the case of different names, timers having the same functions as the DTX HARQ retransmission timer, DTX HARQ RTT timer and DTX inactivity timer described in the present disclosure are all within the protection scope of the present disclosure.

Embodiments of the present disclosure provide a method for maintaining a DTX timer of a sidelink interface, which can implement reasonable maintenance of the DTX timer according to the characteristics of the sidelink interface. The sidelink interface transmitting terminal maintains the DTX-related timer of the sidelink interface according to the SCI sent on the sidelink interface, and reduces power consumption, thereby realizing power saving of the sidelink interface.

The technical solution provided by the embodiments of the present disclosure may be applicable to various systems, especially a fifth-generation mobile communication technology (5th-Generation, 5G) system. For example, the applicable system may be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, Long term evolution advanced (LTE-A) system, universal mobile telecommunications system (UMTS), worldwide interoperability for microwave access (WiMAX) system, 5G New Radio (NR) system, etc. These various systems include terminal devices and network devices. The system may also include a core network part, such as an evolved packet system (EPS), a 5G system (5GS), and the like.

The above embodiment introduces the timer maintenance method of the sidelink interface of the present disclosure, and the following embodiment will further describe the corresponding device in conjunction with the accompanying drawings.

Specifically, as shown in FIG. 6, an embodiment of the present disclosure provides a timer maintenance device 600 of a sidelink interface, which can be applied to a sidelink interface receiving terminal, including:
a first processing unit 610, configured to maintain a discontinuous reception (DRX) related timer of an sidelink interface according to sidelink interface control information (SCI) received by a sidelink interface receiving terminal on the sidelink interface;
the SCI is sent by a sidelink interface transmitting terminal.

Optionally, the first processing unit 610 is specifically configured to:
start and/or stop of the DRX-related timer of the sidelink interface according to the SCI received by the sidelink interface receiving terminal on the sidelink interface;
wherein the DRX-related timer includes: at least one of a DRX HARQ retransmission timer, a DRX HARQ RTT timer, or a DRX inactivity timer.

Optionally, when maintaining the start of the DRX HARQ retransmission timer of the sidelink interface according to the SCI received by the sidelink interface receiving terminal on the sidelink interface, the first processing unit 610 specifically includes:
a first processing subunit, configured to, for the target HARQ process, start the DRX HARQ retransmission timer corresponding to the target HARQ process at a time domain start position of each retransmission resource corresponding to retransmission resource reservation information carried by the SCI corresponding to the target HARQ process;
a second processing subunit, configured to, for the target HARQ process, determine the target time domain position according to the first time domain position of the HARQ process and the minimum time interval between two adjacent transmissions of the target HARQ process, and start the DRX HARQ retransmission timer corresponding to the target HARQ process at the target time domain position, wherein the first time domain position is a time domain start position of the SCI or the physical layer direct link shared channel (PSSCH) corresponding to the last transmission of the target HARQ process;
a third processing subunit, configured to, for the target HARQ process, in the case that the SCI carries the retransmission resource reservation information, start the DRX HARQ retransmission timer corresponding to the target HARQ process at a time domain start position of each retransmission resource corresponding to the retransmission resource reservation information carried by the SCI; in the case that the SCI does not carry the retransmission resource reservation information, determine the target time domain position according to the first time domain position of the HARQ process and the minimum time interval between two adjacent transmissions of the target HARQ process, and start the DRX HARQ retransmission timer corresponding to the target HARQ process at the target time domain position, wherein the first time domain position is the time domain position corresponding to the last transmission of the target HARQ process;
a fourth processing subunit, configured to, for the target HARQ process, start the DRX HARQ retransmission timer corresponding to the target HARQ process after a time domain position where the HARQ RTT timer corresponding to the target HARQ process times out or stops.

Optionally, when maintaining the stop of the DRX HARQ RTT timer of the sidelink interface according to the SCI received by the sidelink interface receiving terminal on the sidelink interface, the first processing unit 610 is specifically configured to:

For the target HARQ process, before the time domain position corresponding to the first target information carried by the SCI, stop the DRX HARQ RTT timer corresponding to the target HARQ process;
wherein the first target information includes: one of initial transmission resource indication information, initial transmission resource reservation information, retransmission resource indication information, and retransmission resource reservation information.

Optionally, when maintaining the start of the DRX HARQ RTT timer corresponding to the sidelink interface according to the SCI received by the sidelink interface receiving terminal on the sidelink interface, the first processing unit 610 specifically includes:
a fifth processing subunit, configured to, for the target HARQ process, start the DRX HARQ RTT timer corresponding to the target HARQ process after the end time of the PSSCH scheduled by the SCI;
a sixth processing subunit, configured to, for the target HARQ process, start the DRX HARQ RTT timer corresponding to the target HARQ process after the end time of the physical layer direct link feedback channel (PSFCH) corresponding to the target HARQ process, wherein the end time of the PSFCH is determined from the SCI;
a seventh processing subunit, configured to, for the target HARQ process, if the PSFCH feedback corresponding to the target HARQ process is negative acknowledgment NACK, start the DRX HARQ RTT timer corresponding to the target HARQ process after the end time of the PSFCH corresponding to the target HARQ process, wherein the end time of the PSFCH is determined according to the SCI.

Optionally, when maintaining the start of the DRX inactivity timer of the sidelink interface according to the SCI received by the sidelink interface receiving terminal on the sidelink interface, the first processing unit 610 specifically includes:
an eighth processing subunit, configured to start the DRX inactivity timer at a time domain start position of an initial transmission resource corresponding to second target information carried by the SCI;
a ninth processing subunit, configured to, if the on Duration timer of the sidelink interface is in an operation state, start the DRX inactivity timer at the time domain start position of the initial transmission resource corresponding to the second target information carried by the SCI;
wherein, the second target information is initial transmission resource reservation information or initial transmission resource indication information

Optionally, the first processing unit 610 is specifically configured to: maintain the DRX-related timer of the sidelink interface according to the SCI after the DRX mechanism of the sidelink interface is enabled.

Optionally, the device also includes:
a third processing unit, configured to deactivate resource re-evaluation and resource re-selection functions of the sidelink interface when the DRX mechanism of the sidelink interface is enabled.

It should be noted that the embodiment of the device corresponds to the embodiment of the timer maintenance method applied to the sidelink interface of the sidelink interface receiving terminal, and all the implementation methods in the method embodiments are applicable to the device embodiment, the same technical effect can also be achieved. Since the method embodiment and the device embodiment are conceived based on the same application, and the principle of solving the problem is similar, they can be referred to each other, and repeated descriptions will not be repeated.

As shown in FIG. 7, an embodiment of the present disclosure provides a timer maintenance device 700 of a sidelink interface, which can be applied to a sidelink interface transmitting terminal, including:
a second processing unit 710 is configured to maintain a discontinuous transmission (DTX) related timer of a sidelink interface according to sidelink interface control information (SCI) sent by a sidelink interface transmitting terminal on the sidelink interface.

Optionally, the second processing unit 710 is specifically configured to:

Maintain start and/or stop of the DTX-related timer of the sidelink interface according to the SCI sent by the sidelink interface transmitting terminal on the sidelink interface;
wherein the DTX-related timer includes: at least one of a DTX HARQ retransmission timer, a DTX HARQ RTT timer, or a DTX inactivity timer.

Optionally, when maintaining the start of the DTX HARQ retransmission timer of the sidelink interface according to the SCI sent by the sidelink interface transmitting terminal on the sidelink interface, the second processing unit 710 specifically includes:
a tenth processing subunit, configured to, for the target HARQ process, start the DTX HARQ retransmission timer corresponding to the target HARQ process at a time domain start position of each retransmission resource corresponding to retransmission resource reservation information carried by the SCI corresponding to the target HARQ process;
an eleventh processing subunit, configured to, for the target HARQ process, determine the target time domain position according to the first time domain position of the HARQ process and the minimum time interval between two adjacent transmissions of the target HARQ process, and starting the DTX HARQ retransmission timer corresponding to the target HARQ process at the target time domain position, wherein the first time domain position is a time domain start position of the SCI or the physical layer direct link shared channel (PSSCH) corresponding to the last transmission of the target HARQ process;
a twelfth processing subunit, configured to, for the target HARQ process, in the case that the SCI carries the retransmission resource reservation information, start the DTX HARQ retransmission timer corresponding to the target HARQ process at a time domain start position of each retransmission resource corresponding to the retransmission resource reservation information carried by the SCI; in the case that the SCI does not carry the retransmission resource reservation information, determine the target time domain position according to the first time domain position of the HARQ process and the minimum time interval between two adjacent transmissions of the target HARQ process, and start the DTX HARQ retransmission timer corresponding to the target HARQ process at the target time domain position, wherein the first time domain position is the time domain position corresponding to the last transmission of the target HARQ process;
a thirteenth processing subunit, configured to, for the target HARQ process, start the DTX HARQ retransmission timer corresponding to the target HARQ process after a time domain position where the HARQ RTT timer corresponding to the target HARQ process times out or stops.

Optionally, when maintaining the stop of the DTX HARQ RTT timer of the sidelink interface according to the SCI sent by the sidelink interface transmitting terminal on the sidelink interface, the second processing unit 710 is specifically configured to:
for the target HARQ process, before the time domain position corresponding to the first target information carried by the SCI, stop the DRX HARQ RTT timer corresponding to the target HARQ process;
wherein the first target information includes: one of initial transmission resource indication information, initial transmission resource reservation information, retransmission resource indication information, and retransmission resource reservation information.

Optionally, when maintaining the start of the DTX HARQ RTT timer corresponding to the sidelink interface according to the SCI sent by the sidelink interface transmitting terminal on the sidelink interface, the second processing unit 710 specifically includes:
a fourteenth processing subunit, configured to, for the target HARQ process, start the DTX HARQ RTT timer corresponding to the target HARQ process after an end time of the PSSCH scheduled by the SCI;
a fifteenth processing subunit, configured to, for the target HARQ process, start the DTX HARQ RTT timer corresponding to the target HARQ process after the end time of the PSFCH corresponding to the target HARQ process, wherein, the end time of the PSFCH is determined according to the SCI;
a sixteenth processing subunit, configured to, for a target HARQ process, if the PSFCH feedback corresponding to the target HARQ process is negative acknowledgment NACK, start the DTX HARQ RTT timer corresponding to the target HARQ process after the end time of the PSFCH corresponding to the target HARQ process, wherein the end time of the PSFCH is determined according to the SCI.

Optionally, when maintaining the start of the DTX inactivity timer of the sidelink interface according to the SCI sent by the sidelink interface transmitting terminal on the sidelink interface, the second processing unit 710 specifically includes:
a seventeenth processing subunit, configured to start the DTX inactivity timer at a time domain start position of an initial transmission resource corresponding to second target information carried by the SCI;
an eighteenth processing subunit, configured to, if the on Duration timer of the sidelink interface is in an operation state, start the DTX inactivity timer at the time domain start position of the initial transmission resource corresponding to the second target information carried by the SCI;
wherein, the second target information is initial transmission resource reservation information or initial transmission resource indication information.

Optionally, the second processing unit 710 is specifically configured to:
After the DTX mechanism of the sidelink interface is enabled, maintain the DTX-related timer of the sidelink interface according to the SCI.

Optionally, the device also includes:
a fourth processing unit, configured to deactivate resource re-evaluation and resource re-selection functions of the sidelink interface when the DTX mechanism of the sidelink interface is enabled.

It should be noted that the embodiment of the device corresponds to the embodiment of the timer maintenance method applied to the sidelink interface of the sidelink interface transmitting terminal, and all the implementation methods in the method embodiments are applicable to the device embodiment, the same technical effect can also be achieved. Since the method embodiment and the device embodiment are conceived based on the same application, and the principle of solving the problem is similar, they can be referred to each other, and repeated descriptions will not be repeated.

It should be noted that the division of the units in the embodiment of the present disclosure is schematic, and is only a logical function division, and there may be another division manner in actual implementation. In addition, each functional unit in each embodiment of the present disclosure may be integrated into one processing unit, each unit may exist separately physically, or two or more units may be integrated into one unit. The integrated units can be implemented in the form of hardware or in the form of software functional units.

If the integrated unit is realized in the form of a software function unit and sold or used as an independent product, it can be stored in a processor-readable storage medium. Based on such an understanding, the essence of the technical solution of the present disclosure or the part that contributes to the related art or all or part of the technical solution can be embodied in the form of a software product, and the computer software product is stored in a storage medium. Several instructions are included to enable a computer device (which may be a personal computer, a server, or a network device, etc.) or a processor to execute all or part of the steps of the methods described in the various embodiments of the present disclosure. The aforementioned storage medium include: U disk, mobile hard disk, read-only memory (ROM), random access memory (RAM), magnetic disk or optical disk and other medium that can store program codes.

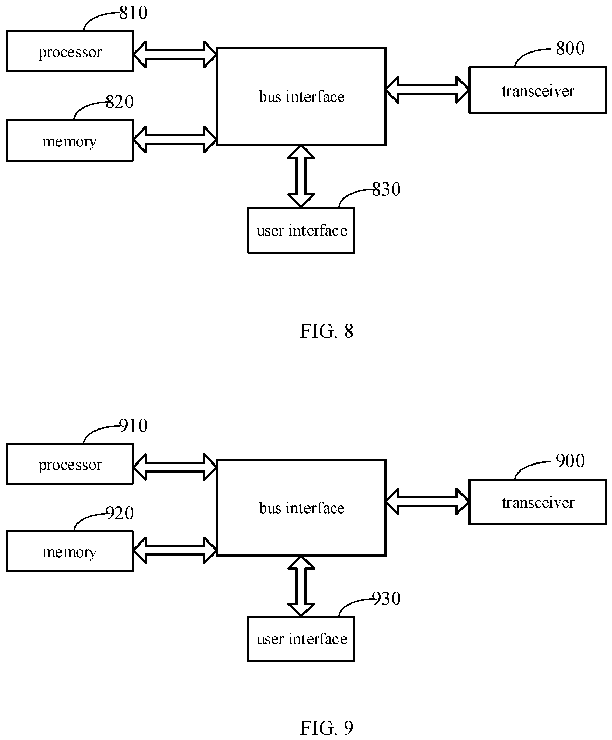

As shown in FIG. 8, the embodiment of the present disclosure also provides a timer maintenance device of a sidelink interface, which is applied to a sidelink interface receiving terminal, including: a memory 820, a transceiver 800, and a processor 810; wherein, the memory 820 is used for storing computer programs; the transceiver 800 is used for sending and receiving data under the control of the processor 810;
The processor 810 is configured to read the computer program in the memory 820 and perform the following operations:
maintaining a discontinuous reception (DRX) related timer of an sidelink interface according to sidelink interface control information (SCI) received by a sidelink interface receiving terminal on the sidelink interface;
wherein the SCI is sent by a sidelink interface transmitting terminal.

Optionally, the maintaining a DRX related timer of an sidelink interface according to SCI received by a sidelink interface receiving terminal on the sidelink interface includes:
Maintaining start and/or stop of the DRX-related timer of the sidelink interface according to the SCI received by the sidelink interface receiving terminal on the sidelink interface;
wherein the DRX-related timer includes: at least one of a DRX HARQ retransmission timer, a DRX HARQ RTT timer, or a DRX inactivity timer.

The DRX-related timers include: at least one of a DRX Hybrid Automatic Repeat Request (HARQ) retransmission timer, a DRX HARQ round-trip delay (RTT) timer, and a DRX inactivity timer.

Optionally, the maintaining the start of the DRX HARQ retransmission timer of the sidelink interface according to the SCI received by the sidelink interface receiving terminal on the sidelink interface may include the following items:
for the target HARQ process, starting the DRX HARQ retransmission timer corresponding to the target HARQ process at a time domain start position of each retransmission resource corresponding to retransmission resource reservation information carried by the SCI corresponding to the target HARQ process;
for the target HARQ process, determining the target time domain position according to the first time domain position of the HARQ process and the minimum time interval between two adjacent transmissions of the target HARQ process, and starting the DRX HARQ retransmission timer corresponding to the target HARQ process at the target time domain position, wherein the first time domain position is a time domain start position of the SCI or the physical layer direct link shared channel (PSSCH) corresponding to the last transmission of the target HARQ process;
for the target HARQ process, in the case that the SCI carries the retransmission resource reservation information, starting the DRX HARQ retransmission timer corresponding to the target HARQ process at a time domain start position of each retransmission resource corresponding to the retransmission resource reservation information carried by the SCI; in the case that the SCI does not carry the retransmission resource reservation information, determining the target time domain position according to the first time domain position of the HARQ process and the minimum time interval between two adj acent transmissions of the target HARQ process, and starting the DRX HARQ retransmission timer corresponding to the target HARQ process at the target time domain position, wherein the first time domain position is the time domain position corresponding to the last transmission of the target HARQ process.
for the target HARQ process, starting the DRX HARQ retransmission timer corresponding to the target HARQ process after a time domain position where the HARQ RTT timer corresponding to the target HARQ process times out or stops.

Optionally, maintaining the stop of the DRX HARQ RTT timer of the sidelink interface according to the SCI received by the sidelink interface receiving terminal on the sidelink interface may include:
for the target HARQ process, before the time domain position corresponding to the first target information carried by the SCI, stopping the DRX HARQ RTT timer corresponding to the target HARQ process;
wherein the first target information includes: one of initial transmission resource indication information, initial transmission resource reservation information, retransmission resource indication information, and retransmission resource reservation information.

Optionally, the maintaining the start of the DRX HARQ RTT timer corresponding to the sidelink interface according to the SCI received by the sidelink interface receiving terminal on the sidelink interface may include the following items:
for the target HARQ process, starting the DRX HARQ RTT timer corresponding to the target HARQ process after the end time of the PSSCH scheduled by the SCI;
for the target HARQ process, starting the DRX HARQ RTT timer corresponding to the target HARQ process after the end time of the physical layer direct link feedback channel (PSFCH) corresponding to the target HARQ process, wherein the end time of the PSFCH is determined from the SCI;
for the target HARQ process, if the PSFCH feedback corresponding to the target HARQ process is negative acknowledgment NACK, starting the DRX HARQ RTT timer corresponding to the target HARQ process after the end time of the PSFCH corresponding to the target HARQ process, wherein the end time of the PSFCH is determined according to the SCI.

Optionally, maintaining the start of the DRX inactivity timer of the sidelink interface according to the SCI received by the sidelink interface receiving terminal on the sidelink interface may include the following items:
starting the DRX inactivity timer at a time domain start position of an initial transmission resource corresponding to second target information carried by the SCI;
if the on Duration timer of the sidelink interface is in an operation state, starting the DRX inactivity timer at the time domain start position of the initial transmission resource corresponding to the second target information carried by the SCI;
wherein, the second target information is initial transmission resource reservation information or initial transmission resource indication information;

Optionally, maintaining the DRX-related timer of the sidelink interface according to the sidelink interface control information SCI received by the sidelink interface receiving terminal on the sidelink interface, specifically includes:
after the DRX mechanism of the sidelink interface is enabled, maintaining the DRX-related timer of the sidelink interface according to the SCI.

Optionally, the processor is also configured to perform the following operations:
When the DRX mechanism of the sidelink interface is enabled, deactivating functions of resource re-evaluation and resource reselection of the sidelink interface.

Wherein, in FIG. 8, the bus architecture may include any number of interconnected buses and bridges, specifically various circuits of one or more processors represented by the processor 810 and the memory represented by the memory 820 are linked together. The bus architecture can also link together various other circuits such as peripherals, voltage regulators, and power management circuits, etc., which are well known in the art and therefore will not be further described herein. The bus interface provides the interface. Transceiver 800 may be a plurality of elements, including a transmitter and a receiver, providing device for communicating with various other devices over transmission medium, including wireless channels, wired channels, fiber optic cables, etc. For different user equipments, the user interface 830 may also be an interface capable of connecting externally and internally to required device, and the connected device includes but not limited to a keypad, a display, a speaker, a microphone, a j oystick, and the like.

The processor 810 is responsible for managing the bus architecture and general processing, and the memory 820 may store data used by the processor 810 when performing operations.

Optionally, the processor 810 may be a central processing unit (CPU), an application specific integrated circuit (ASIC), a field programmable gate array (FPGA) or a complex programmable logic device (CPLD), the processor can also adopt a multi-core architecture.

The processor is used to execute any one of the methods provided by the embodiments of the present disclosure according to the obtained executable instructions by calling the computer program stored in the memory. The processor and memory may also be physically separated.

It should be noted here that the device provided by the embodiment of the present disclosure can implement all the method steps implemented in the embodiment of the timer maintenance method of the sidelink interface applied to the sidelink interface receiving terminal, and can achieve the same technical effect, the same parts and beneficial effects in this embodiment as in the method embodiment will not be described in detail here.

As shown in FIG. 9, an embodiment of the present disclosure also provides a timer maintenance device, which is applied to a sidelink interface transmitting terminal, including: a memory 920, a transceiver 900, and a processor 910; wherein, the memory 920 is used to store a computer program; a transceiver 900 is configured to send and receive data under the control of the processor 910;
The processor 910 is configured to read the computer program in the memory 920 and perform the following operations:
maintaining a discontinuous transmission (DTX) related timer of a sidelink interface according to sidelink interface control information (SCI) sent by a sidelink interface transmitting terminal on the sidelink interface.

Optionally, the maintaining a DTX related timer of an sidelink interface according to SCI sent by a sidelink interface transmitting terminal on the sidelink interface includes:
Maintaining start and/or stop of the DTX-related timer of the sidelink interface according to the SCI sent by the sidelink interface transmitting terminal on the sidelink interface;
wherein the DTX-related timer includes: at least one of a DTX HARQ retransmission timer, a DTX HARQ RTT timer, or a DTX inactivity timer.

Optionally, the maintaining the start of the DTX HARQ retransmission timer of the sidelink interface according to the SCI sent by the sidelink interface sneding terminal on the sidelink interface may include the following items:
for the target HARQ process, starting the DTX HARQ retransmission timer corresponding to the target HARQ process at a time domain start position of each retransmission resource corresponding to retransmission resource reservation information carried by the SCI corresponding to the target HARQ process;
for the target HARQ process, determining the target time domain position according to the first time domain position of the HARQ process and the minimum time interval between two adjacent transmissions of the target HARQ process, and starting the DTX HARQ retransmission timer corresponding to the target HARQ process at the target time domain position; wherein the first time domain position is a time domain start position of the SCI or the physical layer direct link shared channel (PSSCH) corresponding to the last transmission of the target HARQ process;
for the target HARQ process, in the case that the SCI carries the retransmission resource reservation information, starting the DTX HARQ retransmission timer corresponding to the target HARQ process at a time domain start position of each retransmission resource corresponding to the retransmission resource reservation information carried by the SCI; in the case that the SCI does not carry the retransmission resource reservation information, determining the target time domain position according to the first time domain position of the HARQ process and the minimum time interval between two adjacent transmissions of the target HARQ process, and starting the DTX HARQ retransmission timer corresponding to the target HARQ process at the target time domain position, wherein the first time domain position is the time domain position corresponding to the last transmission of the target HARQ process;
for the target HARQ process, starting the DTX HARQ retransmission timer corresponding to the target HARQ process after a time domain position where the HARQ RTT timer corresponding to the target HARQ process times out or stops.

Optionally, maintaining the stop of the DTX HARQ RTT timer of the sidelink interface according to the SCI sent by the sidelink interface transmitting terminal on the sidelink interface, specifically includes:
For the target HARQ process, before the time domain position corresponding to the first target information carried by the SCI, stopping the DTX HARQ RTT corresponding to the target HARQ process;
Wherein, the first target information includes: one of initial transmission resource indication information, initial transmission resource reservation information, retransmission resource indication information, and retransmission resource reservation information.

Optionally, the maintaining the start of the DRX HARQ RTT timer corresponding to the sidelink interface according to the SCI received by the sidelink interface receiving terminal on the sidelink interface may include the following items:
for the target HARQ process, starting the DTX HARQ RTT timer corresponding to the target HARQ process after an end time of the PSSCH scheduled by the SCI;
for the target HARQ process, starting the DTX HARQ RTT timer corresponding to the target HARQ process after the end time of the physical layer direct link feedback channel (PSFCH) corresponding to the target HARQ process, wherein the end time of the PSFCH is determined according to the SCI;
for the target HARQ process, if the PSFCH feedback corresponding to the target HARQ process is negative acknowledgment NACK, starting the DTX HARQ RTT timer corresponding to the target HARQ process after the end time of the PSFCH corresponding to the target HARQ process, wherein the end time of the PSFCH is determined according to the SCI.

Optionally, maintaining the start of the DTX inactivity timer of the sidelink interface according to the SCI sent by the sidelink interface transmitting terminal may include the following items:
starting the DTX inactivity timer at a time domain start position of an initial transmission resource corresponding to second target information carried by the SCI;
if the on Duration timer of the sidelink interface is in an operation state, starting the DTX inactivity timer at the time domain start position of the initial transmission resource corresponding to the second target information carried by the SCI;
wherein, the second target information is initial transmission resource reservation information or initial transmission resource indication information.

Optionally, maintaining the DTX-related timer of the sidelink interface according to the sidelink interface control information SCI sent by the sidelink interface transmitting terminal on the sidelink interface may include:
after the DTX mechanism of the sidelink interface is enabled, maintaining the DTX-related timer of the sidelink interface according to the SCI.

Optionally, the processor is also configured to perform the following operations:
when the DTX mechanism of the sidelink interface is enabled, deactivating the functions of resource re-evaluation and resource reselection of the sidelink interface.

Wherein, in FIG. 9, the bus architecture may include any number of interconnected buses and bridges, specifically various circuits of one or more processors represented by the processor 910 and the memory represented by the memory 920 are linked together. The bus architecture can also link together various other circuits such as peripherals, voltage regulators, and power management circuits, etc., which are well known in the art and therefore will not be further described herein. The bus interface provides the interface. Transceiver 900 may be a plurality of elements, including a transmitter and a receiver, providing device for communicating with various other devices over transmission medium, including wireless channels, wired channels, fiber optic cables, etc. For different user equipments, the user interface 930 may also be an interface capable of connecting externally and internally to required device, and the connected device includes but not limited to a keypad, a display, a speaker, a microphone, a joystick, and the like.

The processor 910 is responsible for managing the bus architecture and general processing, and the memory 920 may store data used by the processor 910 when performing operations.

Optionally, the processor 910 may be a central processing unit (CPU), an application specific integrated circuit (ASIC), a field programmable gate array (FPGA) or a complex programmable logic device (CPLD), the processor can also adopt a multi-core architecture.

The processor is used to execute any one of the methods provided by the embodiments of the present disclosure according to the obtained executable instructions by calling the computer program stored in the memory. The processor and memory may also be physically separated.

It should be noted here that the above-mentioned device provided by the embodiment of the present disclosure can implement all the method steps implemented by the embodiment of the timer maintenance method of the sidelink interface applied to the sidelink interface transmitting terminal, and can achieve the same technical effect, the same parts and beneficial effects in this embodiment as those in the method embodiment will not be described in detail here.

In addition, specific embodiments of the present disclosure further provide a processor-readable storage medium, a computer program is stored in the processor-readable storage medium, the computer program is used to enable the processor to execute the steps in the timer maintenance method of sidelink interface, the same technical effect can be achieved, in order to avoid repetition, no more details is described here. The processor-readable storage medium can be any available medium or data storage device that can be accessed by the processor, including but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, non-volatile memory (NAND FLASH), solid-state hard drive (SSD)), etc.

Those skilled in the art should understand that the embodiments of the present disclosure may be provided as methods, systems, or computer program products. Accordingly, the present disclosure can take the form of an entirely hardware embodiment, an entirely software embodiment, or an embodiment combining software and hardware aspects. Furthermore, the present disclosure may take the form of a computer program product embodied on one or more computer-usable storage mediun (including but not limited to magnetic disk storage, optical storage, etc.) having computer-usable program code embodied therein.

The present disclosure is described with reference to flowchart and/or block diagrams of methods, device (systems), and computer program products according to embodiments of the present disclosure. It should be understood that each procedure and/or block in the flowchart and/or block diagram, and a combination of procedures and/or blocks in the flowchart and/or block diagram can be implemented by computer-executable instructions. These computer-executable instructions can be provided to a general purpose computer, special purpose computer, embedded processor, or processor of other programmable data processing device to produce a machine, so that instructions executed by the processor of the computer or other programmable data processing device produce device for realizing the function specified in one or more procedures in a flowchart and/or one or more blocks in a block diagram.

These processor-executable instructions may also be stored in a processor-readable memory capable of directing a computer or other programmable data processing device to operate in a specific manner, so that the instructions stored in the processor-readable memory produce a manufacturing product, the instruction device realizes the function specified in one or more procedures of the flowchart and/or one or more blocks of the block diagram.

These processor-executable instructions can also be loaded onto a computer or other programmable data processing device, so that a series of operational steps is performed on the computer or other programmable device to produce a computer-implemented process. The instructions provide steps for implementing the functions specified in one or more flow in the flowchart or one or more blocks in the block diagram.

It should be noted that it should be understood that the division of the modules is only a division of logical functions, and may be fully or partially integrated into a physical entity or physically separated during actual implementation. And these modules can all be implemented in the form of calling software through processing elements; they can also be implemented in the form of hardware; some modules can also be implemented in the form of calling software through processing elements, and some modules can be implemented in the form of hardware. For example, the determining module may be a separate processing element, or may be integrated in a chip. In addition, it may be stored in the memory in the form of program code, and a certain processing element of the device may call and execute the functions of the modules. The implementation of other modules is similar. In addition, all or part of these modules can be integrated together, and can also be implemented independently. The processing element may be an integrated circuit with signal processing capability. In the implementation process, each step of the method or each module can be completed by an integrated logic circuit of hardware in the processor element or an instruction in the form of software.

For example, each module, unit, subunit or submodule may be one or more integrated circuits configured to implement the above method, for example: one or more Application Specific Integrated Circuit (ASIC), or, one or more microprocessors (digital signal processor, DSP), or, one or more field programmable gate arrays (FPGA), etc. For another example, when one of the modules is implemented in the form of a processing element calling program code, the processing element may be a general-purpose processor, such as a central processing unit (CPU) or other processors that can call program codes. For another example, these modules can be integrated together and implemented in the form of a system-on-a-chip (SOC).

The terms "first", "second" and the like in the specification and claims of the present disclosure are used to distinguish similar objects, and are not necessarily used to describe a specific order or sequence. It should be understood that the data so used may be interchanged under appropriate circumstances such that the embodiments of the disclosure are practiced, for example, in sequences other than those illustrated or described herein. Furthermore, the terms "comprising" and "including", as well as any variations thereof, are intended to cover a non-exclusive inclusion, for example, a process, method, system, product or device comprising a sequence of steps or elements is not necessarily limited to the expressly listed, may instead include other steps or elements not explicitly listed or inherent to the process, method, product or device. In addition, the use of "and/or" in the description and claims means at least one of the connected objects, such as A and/or B and/or C, which includes A alone, B alone, C alone, and both A and B, both B and C exist, both A and C, and A, B, and C all exist. Similarly, the use of "at least one of A or B" in the present specification and claims should be understood as "A alone, B alone, or both A and B".

The embodiments of the present disclosure have been described above in conjunction with the accompanying drawings, but the present disclosure is not limited to the specific embodiments. The specific embodiments are only illustrative and not restrictive. Under the inspiration of the present disclosure, many forms can be made without departing from the purpose of the present disclosure and the protection scope of the claims, all of forms are within the protection of the present disclosure.

## Claims

1. A timer maintenance method of a sidelink interface, comprising:
maintaining a discontinuous reception (DRX)-related timer of the sidelink interface according to sidelink interface control information (SCI) received by a sidelink interface receiving terminal on the sidelink interface;
wherein the SCI is sent by a sidelink interface transmitting terminal.

2. The method according to claim 1, wherein the maintaining a DRX related timer of the sidelink interface according to SCI received by a sidelink interface receiving terminal on the sidelink interface includes:
determining a length of the DRX-related timer of the sidelink interface according to the SCI received by the sidelink interface receiving terminal on the sidelink interface, wherein the DRX-related timer includes: a DRX Hybrid Automatic Repeat Request (HARQ) round-trip delay (RTT) timer; and/or
maintaining start and/or stop of the DRX-related timer of the sidelink interface according to the SCI received by the sidelink interface receiving terminal on the sidelink interface, wherein the DRX-related timer includes: at least one of a DRX HARQ retransmission timer, the DRX HARQ RTT timer, or a DRX inactivity timer.

3. The method according to claim 2, wherein, the maintaining start of the DRX HARQ retransmission timer of the sidelink interface according to the SCI received by the sidelink interface receiving terminal on the sidelink interface includes the following items:
for a target HARQ process, starting the DRX HARQ retransmission timer corresponding to the target HARQ process at a time domain start position of each retransmission resource corresponding to retransmission resource reservation information carried by the SCI corresponding to the target HARQ process;
for the target HARQ process, determining a target time domain position according to a first time domain position of the HARQ process and a minimum time interval between two adjacent transmissions of the target HARQ process, and starting the DRX HARQ retransmission timer corresponding to the target HARQ process at the target time domain position, wherein the first time domain position is a time domain start position of SCI or physical layer direct link shared channel (PSSCH) corresponding to a last transmission of the target HARQ process;
for the target HARQ process, in the case that the SCI carries the retransmission resource reservation information, starting the DRX HARQ retransmission timer corresponding to the target HARQ process at a time domain start position of each retransmission resource corresponding to the retransmission resource reservation information carried by the SCI; in the case that the SCI does not carry the retransmission resource reservation information, determining the target time domain position according to the first time domain position of the HARQ process and the minimum time interval between two adjacent transmissions of the target HARQ process, and starting the DRX HARQ retransmission timer corresponding to the target HARQ process at the target time domain position, wherein the first time domain position is the time domain position corresponding to the last transmission of the target HARQ process;
for the target HARQ process, starting the DRX HARQ retransmission timer corresponding to the target HARQ process after a time domain position where the HARQ RTT timer corresponding to the target HARQ process times out or stops.

4. The method according to claim 2, wherein the maintaining stop of the DRX HARQ RTT timer of the sidelink interface according to the SCI received by the sidelink interface receiving terminal on the sidelink interface includes:
for a target HARQ process, before a time domain position corresponding to first target information carried by the SCI, stopping the DRX HARQ RTT timer corresponding to the target HARQ process;
wherein the first target information includes: one of initial transmission resource indication information, initial transmission resource reservation information, retransmission resource indication information, and retransmission resource reservation information.

5. The method according to claim 2, wherein the maintaining start of the DRX HARQ RTT timer corresponding to the sidelink interface according to the SCI received by the sidelink interface receiving terminal on the sidelink interface includes one of the following items:
for a target HARQ process, starting the DRX HARQ RTT timer corresponding to the target HARQ process after an end time of PSSCH scheduled by the SCI;
for the target HARQ process, starting the DRX HARQ RTT timer corresponding to the target HARQ process after an end time of physical layer direct link feedback channel (PSFCH) corresponding to the target HARQ process, wherein the end time of the PSFCH is determined according to the SCI;
for the target HARQ process, in the case that the PSFCH feedback corresponding to the target HARQ process is negative acknowledgment (NACK), starting the DRX HARQ RTT timer corresponding to the target HARQ process after the end time of the PSFCH corresponding to the target HARQ process, wherein the end time of the PSFCH is determined according to the SCI.

6. The method according to claim 2, wherein, the maintaining start of the DRX inactivity timer of the sidelink interface according to the SCI received by the sidelink interface receiving terminal on the sidelink interface includes one of the following items:
starting the DRX inactivity timer at a time domain start position of an initial transmission resource corresponding to second target information carried by the SCI;
if an on Duration timer of the sidelink interface is in an operation state, starting the DRX inactivity timer at the time domain start position of the initial transmission resource corresponding to the second target information carried by the SCI;
wherein, the second target information is initial transmission resource reservation information or initial transmission resource indication information.

7. The method according to claim 1, wherein the maintaining the DRX-related timer of the sidelink interface according to the SCI received by the sidelink interface receiving terminal on the sidelink interface includes:
after a DRX mechanism of the sidelink interface is enabled, maintaining the DRX-related timer of the sidelink interface according to the SCI.

8. The method according to claim 7, further comprising:
in the case that the DRX mechanism of the sidelink interface is enabled, deactivating functions of resource re-evaluation and resource reselection of the sidelink interface.

9. A timer maintenance method of a sidelink interface, comprising:
maintaining a discontinuous transmission (DTX)-related timer of the sidelink interface according to sidelink interface control information (SCI) sent by a sidelink interface transmitting terminal on the sidelink interface.

10. The method according to claim 9, wherein the maintaining a DTX related timer of the sidelink interface according to SCI sent by a sidelink interface transmitting terminal on the sidelink interface includes:
maintaining start and/or stop of the DTX-related timer of the sidelink interface according to the SCI sent by the sidelink interface transmitting terminal on the sidelink interface;
wherein the DTX-related timer includes: at least one of a DTX HARQ retransmission timer, a DTX HARQ RTT timer, or a DTX inactivity timer.

11. The method according to claim 10, wherein the maintaining start of the DTX HARQ retransmission timer of the sidelink interface according to the SCI sent by the sidelink interface transmitting terminal on the sidelink interface includes the following items:
for a target HARQ process, starting the DTX HARQ retransmission timer corresponding to the target HARQ process at a time domain start position of each retransmission resource corresponding to retransmission resource reservation information carried by the SCI corresponding to the target HARQ process;
for the target HARQ process, determining a target time domain position according to a first time domain position of the HARQ process and a minimum time interval between two adjacent transmissions of the target HARQ process, and starting the DTX HARQ retransmission timer corresponding to the target HARQ process at the target time domain position; wherein the first time domain position is a time domain start position of SCI or physical layer direct link shared channel (PSSCH) corresponding to a last transmission of the target HARQ process;
for the target HARQ process, in the case that the SCI carries the retransmission resource reservation information, starting the DTX HARQ retransmission timer corresponding to the target HARQ process at a time domain start position of each retransmission resource corresponding to the retransmission resource reservation information carried by the SCI; in the case that the SCI does not carry the retransmission resource reservation information, determining the target time domain position according to the first time domain position of the HARQ process and the minimum time interval between two adjacent transmissions of the target HARQ process, and starting the DTX HARQ retransmission timer corresponding to the target HARQ process at the target time domain position, wherein the first time domain position is the time domain position corresponding to the last transmission of the target HARQ process;
for the target HARQ process, starting the DTX HARQ retransmission timer corresponding to the target HARQ process after a time domain position where the HARQ RTT timer corresponding to the target HARQ process times out or stops.

12. The method according to claim 10, wherein the maintaining stop of the DTX HARQ RTT timer of the sidelink interface according to the SCI sent by the sidelink interface transmitting terminal on the sidelink interface includes:
for a target HARQ process, before a time domain position corresponding to first target information carried by the SCI, stopping the DTX HARQ RTT corresponding to the target HARQ process;
wherein the first target information includes: one of initial transmission resource indication information, initial transmission resource reservation information, retransmission resource indication information, and retransmission resource reservation information.

13. The method according to claim 10, wherein the maintaining start of the DTX HARQ RTT timer corresponding to the sidelink interface according to the SCI sent by the sidelink interface transmitting terminal on the sidelink interface includes the following items:
for a target HARQ process, starting the DTX HARQ RTT timer corresponding to the target HARQ process after an end time of PSSCH scheduled by the SCI;
for the target HARQ process, starting the DTX HARQ RTT timer corresponding to the target HARQ process after an end time of physical layer direct link feedback channel (PSFCH) corresponding to the target HARQ process, wherein the end time of the PSFCH is determined according to the SCI;
for the target HARQ process, in the case that the PSFCH feedback corresponding to the target HARQ process is negative acknowledgment (NACK), starting the DTX HARQ RTT timer corresponding to the target HARQ process after the end time of the PSFCH corresponding to the target HARQ process, wherein the end time of the PSFCH is determined according to the SCI.

14. The method according to claim 10, wherein, the maintaining start of the DTX inactivity timer of the sidelink interface according to the SCI sent by the sidelink interface transmitting terminal on the sidelink interface include the following items:
starting the DTX inactivity timer at a time domain start position of an initial transmission resource corresponding to second target information carried by the SCI;
if an on Duration timer of the sidelink interface is in an operation state, starting the DTX inactivity timer at the time domain start position of the initial transmission resource corresponding to the second target information carried by the SCI;
wherein the second target information is initial transmission resource reservation information or initial transmission resource indication information.

15. The method according to claim 9, wherein the maintaining the DTX-related timer of the sidelink interface according to the SCI sent by the sidelink interface transmitting terminal on the sidelink interface includes:
after a DTX mechanism of the sidelink interface is enabled, maintaining the DTX-related timer of the sidelink interface according to the SCI.

16. The method according to claim 15, further comprising:
in the case that the DTX mechanism of the sidelink interface is enabled, deactivating functions of resource re-evaluation and resource reselection of the sidelink interface.

17. A timer maintenance device of a sidelink interface, comprising: a memory, a transceiver, and a processor; the processor is used to read a computer program in the memory and perform the following operations:
maintaining a discontinuous reception (DRX)-related timer of the sidelink interface according to sidelink interface control information (SCI) received by a sidelink interface receiving terminal on the sidelink interface;
wherein the SCI is sent by a sidelink interface transmitting terminal.

18. The device according to claim 17, wherein, the maintaining a DRX related timer of the sidelink interface according to SCI received by a sidelink interface receiving terminal on the sidelink interface includes:
determining a length of the DRX-related timer of the sidelink interface according to the SCI received by the sidelink interface receiving terminal on the sidelink interface, wherein the DRX-related timer includes: a DRX Hybrid Automatic Repeat Request (HARQ) round-trip delay (RTT) timer; and/or
maintaining start and/or stop of the DRX-related timer of the sidelink interface according to the SCI received by the sidelink interface receiving terminal on the sidelink interface, wherein the DRX-related timer includes: at least one of a DRX HARQ retransmission timer, the DRX HARQ RTT timer, or a DRX inactivity timer.

19. The device according to claim 18, wherein, the maintaining start of the DRX HARQ retransmission timer of the sidelink interface according to the SCI received by the sidelink interface receiving terminal on the sidelink interface includes the following items:
for a target HARQ process, starting the DRX HARQ retransmission timer corresponding to the target HARQ process at a time domain start position of each retransmission resource corresponding to retransmission resource reservation information carried by the SCI corresponding to the target HARQ process;
for the target HARQ process, determining a target time domain position according to a first time domain position of the HARQ process and a minimum time interval between two adjacent transmissions of the target HARQ process, and starting the DRX HARQ retransmission timer corresponding to the target HARQ process at the target time domain position, wherein the first time domain position is a time domain start position of SCI or physical layer direct link shared channel (PSSCH) corresponding to a last transmission of the target HARQ process;
for the target HARQ process, in the case that the SCI carries the retransmission resource reservation information, starting the DRX HARQ retransmission timer corresponding to the target HARQ process at a time domain start position of each retransmission resource corresponding to the retransmission resource reservation information carried by the SCI; in the case that the SCI does not carry the retransmission resource reservation information, determining the target time domain position according to the first time domain position of the HARQ process and the minimum time interval between two adjacent transmissions of the target HARQ process, and starting the DRX HARQ retransmission timer corresponding to the target HARQ process at the target time domain position, wherein the first time domain position is the time domain position corresponding to the last transmission of the target HARQ process;
for the target HARQ process, starting the DRX HARQ retransmission timer corresponding to the target HARQ process after a time domain position where the HARQ RTT timer corresponding to the target HARQ process times out or stops.

20. The device according to claim 18, wherein, the maintaining stop of the DRX HARQ RTT timer of the sidelink interface according to the SCI received by the sidelink interface receiving terminal on the sidelink interface includes:
for a target HARQ process, before a time domain position corresponding to first target information carried by the SCI, stopping the DRX HARQ RTT timer corresponding to the target HARQ process;
wherein the first target information includes: one of initial transmission resource indication information, initial transmission resource reservation information, retransmission resource indication information, and retransmission resource reservation information.

21. The device according to claim 18, wherein, the maintaining start of the DRX HARQ RTT timer corresponding to the sidelink interface according to the SCI received by the sidelink interface receiving terminal on the sidelink interface includes one of the following items:
for a target HARQ process, starting the DRX HARQ RTT timer corresponding to the target HARQ process after an end time of PSSCH scheduled by the SCI;
for the target HARQ process, starting the DRX HARQ RTT timer corresponding to the target HARQ process after an end time of physical layer direct link feedback channel (PSFCH) corresponding to the target HARQ process, wherein the end time of the PSFCH is determined according to the SCI;
for the target HARQ process, in the case that the PSFCH feedback corresponding to the target HARQ process is negative acknowledgment (NACK), starting the DRX HARQ RTT timer corresponding to the target HARQ process after the end time of the PSFCH corresponding to the target HARQ process, wherein the end time of the PSFCH is determined according to the SCI.

22. The device according to claim 18, wherein, the maintaining start of the DRX inactivity timer of the sidelink interface according to the SCI received by the sidelink interface receiving terminal on the sidelink interface includes one of the following items:
starting the DRX inactivity timer at a time domain start position of an initial transmission resource corresponding to second target information carried by the SCI;
if an on Duration timer of the sidelink interface is in an operation state, starting the DRX inactivity timer at the time domain start position of the initial transmission resource corresponding to the second target information carried by the SCI;
wherein, the second target information is initial transmission resource reservation information or initial transmission resource indication information.

23. The device according to claim 17, wherein, the maintaining the DRX-related timer of the sidelink interface according to the SCI received by the sidelink interface receiving terminal on the sidelink interface includes:
after a DRX mechanism of the sidelink interface is enabled, maintaining the DRX-related timer of the sidelink interface according to the SCI.

24. The device according to claim 23, wherein the processor is further configured to implement the following operation:
in the case that the DRX mechanism of the sidelink interface is enabled, deactivating functions of resource re-evaluation and resource reselection of the sidelink interface.

25. A timer maintenance device of a sidelink interface, comprising: a memory, a transceiver, and a processor; the processor is used to read a computer program in the memory and perform the following operations:
maintaining a discontinuous transmission (DTX)-related timer of the sidelink interface according to sidelink interface control information (SCI) sent by a sidelink interface transmitting terminal on the sidelink interface.

26. The device according to claim 25, wherein, the maintaining a DTX related timer of the sidelink interface according to SCI sent by a sidelink interface transmitting terminal on the sidelink interface includes:
maintaining start and/or stop of the DTX-related timer of the sidelink interface according to the SCI sent by the sidelink interface transmitting terminal on the sidelink interface;
wherein the DTX-related timer includes: at least one of a DTX HARQ retransmission timer, a DTX HARQ RTT timer, or a DTX inactivity timer.

27. The device according to claim 26, wherein, the maintaining start of the DTX HARQ retransmission timer of the sidelink interface according to the SCI sent by the sidelink interface transmitting terminal on the sidelink interface includes the following items:
for a target HARQ process, starting the DTX HARQ retransmission timer corresponding to the target HARQ process at a time domain start position of each retransmission resource corresponding to retransmission resource reservation information carried by the SCI corresponding to the target HARQ process;
for the target HARQ process, determining a target time domain position according to a first time domain position of the HARQ process and a minimum time interval between two adjacent transmissions of the target HARQ process, and starting the DTX HARQ retransmission timer corresponding to the target HARQ process at the target time domain position; wherein the first time domain position is a time domain start position of SCI or physical layer direct link shared channel (PSSCH) corresponding to a last transmission of the target HARQ process;
for the target HARQ process, in the case that the SCI carries the retransmission resource reservation information, starting the DTX HARQ retransmission timer corresponding to the target HARQ process at a time domain start position of each retransmission resource corresponding to the retransmission resource reservation information carried by the SCI; in the case that the SCI does not carry the retransmission resource reservation information, determining the target time domain position according to the first time domain position of the HARQ process and the minimum time interval between two adjacent transmissions of the target HARQ process, and starting the DTX HARQ retransmission timer corresponding to the target HARQ process at the target time domain position, wherein the first time domain position is the time domain position corresponding to the last transmission of the target HARQ process;
for the target HARQ process, starting the DTX HARQ retransmission timer corresponding to the target HARQ process after a time domain position where the HARQ RTT timer corresponding to the target HARQ process times out or stops.

28. The device according to claim 26, wherein, the maintaining stop of the DTX HARQ RTT timer of the sidelink interface according to the SCI sent by the sidelink interface transmitting terminal on the sidelink interface includes:
for a target HARQ process, before a time domain position corresponding to first target information carried by the SCI, stopping the DTX HARQ RTT corresponding to the target HARQ process;
wherein the first target information includes: one of initial transmission resource indication information, initial transmission resource reservation information, retransmission resource indication information, and retransmission resource reservation information.

29. The device according to claim 26, wherein, the maintaining start of the DTX HARQ RTT timer corresponding to the sidelink interface according to the SCI sent by the sidelink interface transmitting terminal on the sidelink interface includes the following items:
for a target HARQ process, starting the DTX HARQ RTT timer corresponding to the target HARQ process after an end time of PSSCH scheduled by the SCI;
for the target HARQ process, starting the DTX HARQ RTT timer corresponding to the target HARQ process after an end time of physical layer direct link feedback channel (PSFCH) corresponding to the target HARQ process, wherein the end time of the PSFCH is determined according to the SCI;
for the target HARQ process, in the case that the PSFCH feedback corresponding to the target HARQ process is negative acknowledgment (NACK), starting the DTX HARQ RTT timer corresponding to the target HARQ process after the end time of the PSFCH corresponding to the target HARQ process, wherein the end time of the PSFCH is determined according to the SCI.

30. The device according to claim 26, wherein, the maintaining start of the DTX inactivity timer of the sidelink interface according to the SCI sent by the sidelink interface transmitting terminal on the sidelink interface include the following items:
starting the DTX inactivity timer at a time domain start position of an initial transmission resource corresponding to second target information carried by the SCI;
if an on Duration timer of the sidelink interface is in an operation state, starting the DTX inactivity timer at the time domain start position of the initial transmission resource corresponding to the second target information carried by the SCI;
wherein the second target information is initial transmission resource reservation information or initial transmission resource indication information.

31. The device according to claim 25, wherein, the maintaining the DTX-related timer of the sidelink interface according to the SCI sent by the sidelink interface transmitting terminal on the sidelink interface includes:
after a DTX mechanism of the sidelink interface is enabled, maintaining the DTX-related timer of the sidelink interface according to the SCI.

32. The device according to claim 31, wherein the processor is further configured to implement the following operation:
in the case that the DTX mechanism of the sidelink interface is enabled, deactivating functions of resource re-evaluation and resource reselection of the sidelink interface.

33. A timer maintenance device of a sidelink interface, comprising:
a first processing unit, configured to maintain a discontinuous reception (DRX)-related timer of the sidelink interface according to sidelink interface control information (SCI) received by a sidelink interface receiving terminal on the sidelink interface;
wherein the SCI is sent by a sidelink interface transmitting terminal.

34. The device according to claim 33, wherein the first processing unit comprises:
a first determination subunit, configured to determine a length of the DRX-related timer of the sidelink interface according to the SCI received by the sidelink interface receiving terminal on the sidelink interface, wherein the DRX-related timer includes: a DRX Hybrid Automatic Repeat Request (HARQ) round-trip delay (RTT) timer; and/or
a first maintenance subunit, configured to maintain start and/or stop of the DRX-related timer of the sidelink interface according to the SCI received by the sidelink interface receiving terminal on the sidelink interface, wherein the DRX-related timer includes: at least one of a DRX HARQ retransmission timer, the DRX HARQ RTT timer, or a DRX inactivity timer.

35. The device according to claim 34, wherein the first maintenance subunit comprises one of the following:
a first start subunit, configured to, for a target HARQ process, start the DRX HARQ retransmission timer corresponding to the target HARQ process at a time domain start position of each retransmission resource corresponding to retransmission resource reservation information carried by the SCI corresponding to the target HARQ process;
a second determination subunit, configured to, for the target HARQ process, determine a target time domain position according to a first time domain position of the HARQ process and a minimum time interval between two adj acent transmissions of the target HARQ process, and start the DRX HARQ retransmission timer corresponding to the target HARQ process at the target time domain position, wherein the first time domain position is a time domain start position of SCI or physical layer direct link shared channel (PSSCH) corresponding to a last transmission of the target HARQ process;
a first processing subunit, configured to, for the target HARQ process, in the case that the SCI carries the retransmission resource reservation information, start the DRX HARQ retransmission timer corresponding to the target HARQ process at a time domain start position of each retransmission resource corresponding to the retransmission resource reservation information carried by the SCI; in the case that the SCI does not carry the retransmission resource reservation information, determine the target time domain position according to the first time domain position of the HARQ process and the minimum time interval between two adjacent transmissions of the target HARQ process, and start the DRX HARQ retransmission timer corresponding to the target HARQ process at the target time domain position, wherein the first time domain position is the time domain position corresponding to the last transmission of the target HARQ process;
a second starting subunit, configured to, for the target HARQ process, start the DRX HARQ retransmission timer corresponding to the target HARQ process after a time domain position where the HARQ RTT timer corresponding to the target HARQ process times out or stops.

36. The device according to claim 34, wherein the first maintenance subunit comprises:
a first stop subunit, configured to, for a target HARQ process, before a time domain position corresponding to first target information carried by the SCI, stop the DRX HARQ RTT timer corresponding to the target HARQ process;
wherein the first target information includes: one of initial transmission resource indication information, initial transmission resource reservation information, retransmission resource indication information, and retransmission resource reservation information

37. The device according to claim 34, wherein the first maintenance subunit comprises one of the following:
a third start subunit, configured to, for a target HARQ process, start the DRX HARQ RTT timer corresponding to the target HARQ process after an end time of PSSCH scheduled by the SCI;
a fourth start subunit, configured to, for the target HARQ process, start the DRX HARQ RTT timer corresponding to the target HARQ process after an end time of physical layer direct link feedback channel (PSFCH) corresponding to the target HARQ process, wherein the end time of the PSFCH is determined according to the SCI;
a fifth start subunit, configured to, for the target HARQ process, in the case that the PSFCH feedback corresponding to the target HARQ process is negative acknowledgment (NACK), start the DRX HARQ RTT timer corresponding to the target HARQ process after the end time of the PSFCH corresponding to the target HARQ process, wherein the end time of the PSFCH is determined according to the SCI.

38. The device according to claim 34, wherein the first maintenance subunit comprises one of the following:
a sixth start subunit, configured to start the DRX inactivity timer at a time domain start position of an initial transmission resource corresponding to second target information carried by the SCI;
a seventh start subunit, configured to, if an on Duration timer of the sidelink interface is in an operation state, start the DRX inactivity timer at the time domain start position of the initial transmission resource corresponding to the second target information carried by the SCI;
wherein, the second target information is initial transmission resource reservation information or initial transmission resource indication information.

39. The device according to claim 33, wherein the first processing unit comprises:
a second maintenance subunit, configured to, after a DRX mechanism of the sidelink interface is enabled, maintain the DRX-related timer of the sidelink interface according to the SCI.

40. The device according to claim 39, further comprising:
a first activation unit, configured to, in the case that the DRX mechanism of the sidelink interface is enabled, deactivate functions of resource re-evaluation and resource reselection of the sidelink interface.

41. A timer maintenance device of a sidelink interface, comprising:
a second processing unit, configured to maintain a discontinuous transmission (DTX)-related timer of the sidelink interface according to sidelink interface control information (SCI) sent by a sidelink interface transmitting terminal on the sidelink interface.

42. The device according to claim 41, wherein the second processing unit comprises:
a third maintenance subunit, configured to maintain start and/or stop of the DTX-related timer of the sidelink interface according to the SCI sent by the sidelink interface transmitting terminal on the sidelink interface;
wherein the DTX-related timer includes: at least one of a DTX HARQ retransmission timer, a DTX HARQ RTT timer, or a DTX inactivity timer.

43. The device according to claim 42, wherein the third maintenance subunit comprises one of the following:
an eighth start subunit, configured to, for a target HARQ process, start the DTX HARQ retransmission timer corresponding to the target HARQ process at a time domain start position of each retransmission resource corresponding to retransmission resource reservation information carried by the SCI corresponding to the target HARQ process;
a third determination subunit, configured to, for the target HARQ process, determine a target time domain position according to a first time domain position of the HARQ process and a minimum time interval between two adj acent transmissions of the target HARQ process, and start the DTX HARQ retransmission timer corresponding to the target HARQ process at the target time domain position; wherein the first time domain position is a time domain start position of SCI or physical layer direct link shared channel (PSSCH) corresponding to a last transmission of the target HARQ process;
a second processing subunit, configured to, for the target HARQ process, in the case that the SCI carries the retransmission resource reservation information, start the DTX HARQ retransmission timer corresponding to the target HARQ process at a time domain start position of each retransmission resource corresponding to the retransmission resource reservation information carried by the SCI; in the case that the SCI does not carry the retransmission resource reservation information, determine the target time domain position according to the first time domain position of the HARQ process and the minimum time interval between two adjacent transmissions of the target HARQ process, and start the DTX HARQ retransmission timer corresponding to the target HARQ process at the target time domain position, wherein the first time domain position is the time domain position corresponding to the last transmission of the target HARQ process;
a ninth start subunit, configured to, for the target HARQ process, start the DTX HARQ retransmission timer corresponding to the target HARQ process after a time domain position where the HARQ RTT timer corresponding to the target HARQ process times out or stops.

44. The device according to claim 42, wherein the third maintenance subunit comprises:
a second stop subunit, configured to, for a target HARQ process, before a time domain position corresponding to first target information carried by the SCI, stop the DTX HARQ RTT corresponding to the target HARQ process;
wherein the first target information includes: one of initial transmission resource indication information, initial transmission resource reservation information, retransmission resource indication information, and retransmission resource reservation information.

45. The device according to claim 42, wherein the third maintenance subunit comprises one of the following:
a tenth start subunit, configured to, for a target HARQ process, start the DTX HARQ RTT timer corresponding to the target HARQ process after an end time of PSSCH scheduled by the SCI;
an eleventh start subunit, configured to, for the target HARQ process, start the DTX HARQ RTT timer corresponding to the target HARQ process after an end time of physical layer direct link feedback channel (PSFCH) corresponding to the target HARQ process, wherein the end time of the PSFCH is determined according to the SCI;
a twelfth start subunit, configured to, for the target HARQ process, in the case that the PSFCH feedback corresponding to the target HARQ process is negative acknowledgment (NACK), start the DTX HARQ RTT timer corresponding to the target HARQ process after the end time of the PSFCH corresponding to the target HARQ process, wherein the end time of the PSFCH is determined according to the SCI.

46. The device according to claim 42, wherein the third maintenance subunit comprises one of the following:
a thirteenth start subunit, configured to start the DTX inactivity timer at a time domain start position of an initial transmission resource corresponding to second target information carried by the SCI;
a fourteenth start subunit, configured to, if an on Duration timer of the sidelink interface is in an operation state, start the DTX inactivity timer at the time domain start position of the initial transmission resource corresponding to the second target information carried by the SCI;
wherein the second target information is initial transmission resource reservation information or initial transmission resource indication information.

47. The device according to claim 41, wherein the second processing unit comprises:
a fourth maintenance subunit, configured to, after a DTX mechanism of the sidelink interface is enabled, maintain the DTX-related timer of the sidelink interface according to the SCI.

48. The device according to claim 47, further comprising:
a second activation unit, configured to, in the case that the DTX mechanism of the sidelink interface is enabled, deactivate functions of resource re-evaluation and resource reselection of the sidelink interface.

49. A processor readable storage medium, storing a computer program, wherein the computer program is executed by a processor to implement the timer maintenance method according to any one of claims 1 to 16.
